# EUROPÄISCHE PATENTSCHRIFT

(11) **EP 3 202 235 B1**
(45) Veröffentlichungstag und Bekanntmachung des Hinweises auf die Patenterteilung: **24.03.2021**
(21) Anmeldenummer: 15778890.2
(22) Anmeldetag: 28.09.2015
(51) Int. Cl.: H05B 33/08, H02M 3/158, H02M 1/00

(54) **GETAKTETER ELEKTRONISCHER ENERGIEWANDLER MIT EINSTELLBARER LÜCKENZEIT**
CLOCKED ELECTRONIC ENERGY CONVERTER
CONVERTISSEUR ÉLECTRONIQUE DE PUISSANCE CADENCÉ

(30) Priorität: 02.10.2014 DE 102014220099
(43) Veröffentlichungstag der Anmeldung: 09.08.2017
(73) Patentinhaber: OSRAM GmbH, 80807 München (DE)
(72) Erfinder: MAYER, Siegfried, 85452 Moosinning (DE); BUSSE, Olaf, 80686 München (DE); SCHWARZFISCHER, Christof, 83646 Wackersberg (DE); GERBER, Maximilian, 81249 München (DE)
(74) Vertreter: OSRAM GmbH - GC IP
(86) Internationale Anmeldenummer: PCT/EP2015/072260
(87) Internationale Veröffentlichungsnummer: WO 2016/050689

(56) Entgegenhaltungen:
- US-A1- 2014 078 798

## Beschreibung

### Technisches Gebiet

Die vorliegende Erfindung betrifft einen getakteten elektronischen Energiewandler mit einem elektronischen Schaltelement, wenigstens zwei elektrischen Energiespeichern, einem ersten Anschluss zum Anschließen einer elektrischen Energiequelle, einem zweiten Anschluss zum Anschließen einer elektrischen Energiesenke, einem Taktgeber zum Ansteuern und Betreiben des elektronischen Schaltelements im Schaltbetrieb und einem Eingangsanschluss für ein erstes Signal zur Einstellung einer zu übertragenden Leistung des Energiewandlers. Der Energiewandler umfasst des Weiteren einen an den Taktgeber und den Eingangsanschluss angeschlossenen ersten Zeitgeber zur Bereitstellung eines eine Einschaltzeit repräsentierenden zweiten Signals, wobei der Taktgeber dazu ausgelegt ist, die zu übertragende Leistung des Energiewandlers in einem ersten Leistungsbereich mittels der Einschaltzeit des elektronischen Schaltelements einzustellen, sowie einen an den Taktgeber und den Eingangsanschluss angeschlossenen zweiten Zeitgeber zur Bereitstellung eines eine Ergänzungsausschaltzeit repräsentierenden dritten Signals in einem zweiten Leistungsbereich, in dem die zu übertragende Leistung des Energiewandlers kleiner als in dem ersten Leistungsbereich ist, wobei der Taktgeber dazu ausgelegt ist, die zu übertragende Leistung des Energiewandlers in dem zweiten Leistungsbereich mittels einer Kombination des zweiten und des dritten Signals einzustellen. Ferner betrifft die Erfindung eine Leuchtvorrichtung mit einem Leuchtmittel und einem elektronischen Anschluss zum Anschließen der Leuchtvorrichtung an eine elektrische Energiequelle. Schließlich betrifft die Erfindung ein Verfahren zum Einstellen einer mittels eines getakteten elektronischen Energiewandlers zu übertragenden elektrischen Leistung, zu welchem Zweck ein elektronisches Schaltelement des elektronischen Energiewandlers taktend mit einer Einschaltzeit betrieben wird, wobei die zu übertragende Leistung des Energiewandlers in einem ersten Leistungsbereich mittels der Einschaltzeit eingestellt wird, und wobei in einem zweiten Leistungsbereich, in dem die zu übertragende Leistung des Energiewandlers kleiner ist als in dem ersten Leistungsbereich, die zu übertragende Leistung des Energiewandlers mittels einer Kombination der Einschaltzeit und der Ergänzungsausschaltzeit eingestellt wird.

### Stand der Technik

Bei Leuchtdiodenanwendungen werden vermehrt dimmbare Vorschaltgeräte mit großem Eingangs- und Ausgangsspannungsbereich gefordert. Damit wird bei Leuchtdiodenanwendungen ein einstellbarer Leistungsbereich gefordert, welcher einen einstellbaren Leistungsbereich eines üblichen Vorschaltgerätes für Leuchtstofflampen deutlich überschreitet. Zwar gibt es auch dort Vorschaltgeräte, welche verschiedene Lasten bis jeweils auf eine Teilleistung von etwa 1% dimmen können, jedoch müssen diese Vorschaltgeräte zusätzlich immer eine Grundleistung für die Heizung der Elektrodenwendeln der Leuchtstofflampen aufbringen, so dass Konverterstufen der Vorschaltgeräte immer eine entsprechende Mindestleistung aufbringen müssen, die selten kleiner als 10% der Bemessungsleistung ist. Bei Vorschaltgeräten für Festkörper-Beleuchtung (englisch: Solid-State Lighting, SSL) ist dies anders. Hier ist häufig ein Leistungsbereich gefordert, der bis auf 100 mW beziehungsweise bis auf unter ein Prozent der Bemessungsleistung einstellbar ist. In diesem Zusammenhang offenbart US 2012/0286686 A1 eine Beleuchtungseinrichtung für eine Festkörper-Lichtquelle.

Aus der US 2014 078798 A1 ist eine Leistungsfaktorkorrekturschaltung bekannt, die die Schaltfrequenz ihres Schalttransistors in Korrespondenz mit der benötigten Leistung eines die Leistung repräsentierenden Signals am Eingang der Schaltung verändert.

SSL-Vorschaltgeräte weisen häufig Energiewandler beziehungsweise Konverter auf, die im Schaltbetrieb betrieben werden, das heißt, getaktet werden. Um die sehr kleinen Leistungen erzeugen zu können, werden die Konverter häufig bei sehr hohen Frequenzen betrieben. Dies verursacht nicht nur hohe Schaltverluste, sondern kann darüber hinaus auch Probleme hinsichtlich der elektromagnetischen Verträglichkeit (EMV) verursachen.

Weiterhin erfordert der Betrieb bei hohen Frequenzen hierfür geeignete Leistungsbauteile sowie gegebenenfalls entsprechende schaltungstechnische Maßnahmen, die mit hohen Kosten verbunden sind. Aus diesem Grund werden solche Konverter zur Bereitstellung sehr kleiner Leistungen, beispielsweise im Hochsetzbetrieb oder auch im Tiefsetzbetrieb, unterhalb einer vorgegebenen Vergleichsleistung in einem sogenannten Burst-Betrieb betrieben. Der Burst-Betrieb zeichnet sich dadurch aus, dass die Konverter für einige Taktzyklen angeschaltet bleiben und danach für eine längere Zeit, das heißt, mehrere Taktzyklen, deaktiviert werden. Der Burst-Betrieb erweist sich insoweit als nachteilig, als dass eine Geräuschentwicklung durch Frequenzen im hörbaren Bereich, die sich aus der Abfolge der Burstpakete ergeben, die Folge sein kann und ein Zwischenkreis eines solchen Konverters einen erhöhten Rippel aufgrund des dem Prinzip eines 2-Punkt-Reglers folgenden Betriebs aufweisen kann.

In einer bekannten Ausführungsform einer derartigen Beleuchtungseinrichtung ist nach einer durch die vollständige Entladung eines Energiespeichers gegebenen Ausschaltzeit eine zusätzliche Ergänzungsausschaltzeit, welche beispielsweise als Pausenzeit bezeichnet wird, eingefügt. Diese Pausenzeit wird nach jedem Taktzyklus eingefügt, sodass sich die Periodendauer des Ansteuertaktes verlängert.

Insbesondere kann dabei die Einschaltzeitdauer des elektronischen Schaltelements in einem bestimmten Leistungsbereich auf einen festen Wert eingestellt sein. Bei einem Betrieb nach einem derartigen Verfahren sind allerdings Kompromisse zu finden bezüglich Verlustleistung, einer konstanten, stetigen Übertragungskennlinie, der Genauigkeit der Ausgangsspannung sowie des Leistungsbereichs, in dem die Beleuchtungseinrichtung entsprechend vorgegebener Randbedingungen betrieben werden kann. Da Leuchtdioden Lichtquellen mit sehr kurzen Reaktionszeiten sind, werden hier besondere Anforderungen an die Konstanz der übertragenen Leistung gestellt. Des Weiteren ist es besonders für das Dimmen der Beleuchtungsvorrichtung von großer Bedeutung, dass die Übertragungskennlinie des Energiewandlers stetig und insbesondere monoton verläuft, sodass die übertragene Leistung des Energiewandlers auch unmittelbar einer Änderung des vorgegebenen Dimmniveaus folgt.

### Darstellung der Erfindung

Die Erfindung geht aus von einein Konverter in Form eines getakteten elektronischen Energiewandlers, der beispielsweise als einstufige Wandlerschaltung ausgebildet sein kann. Ein derartiger Energiewandler kann beispielsweise ein Hochsetzsteller (englische Bezeichnung: Boost Converter) oder auch ein Tiefsetzsteller (englische Bezeichnung: Buck Converter) sein.

Davon ausgehend ergibt sich die Aufgabe der Erfindung, einen Energiewandler sowie ein Verfahren zu dessen Betrieb derart weiterzubilden, dass dieser auch in kritischen LED-Anwendungen, welche sehr hohe Anforderungen hinsichtlich eines stabilen Betriebs, zum Beispiel hinsichtlichs Flackerns, stellen, in einem breiten Leistungsbereich eingesetzt werden können. Diese Aufgabe wird gelöst durch einen getakteten elektronischen Energiewandler mit den Merkmalen des unabhängigen Patentanspruchs 1. Entsprechend schlägt die Erfindung eine Leuchtvorrichtung gemäß dem weiteren unabhängigen Patentanspruch 9 vor. Ein Verfahren zur Lösung der gestellten Aufgabe ist durch die Merkmale des unabhängigen Patentanspruchs 10 gegeben. Weitere vorteilhafte Ausgestaltungen sind Gegenstand der abhängigen Ansprüche.

Der Erfindung liegt die Erkenntnis zugrunde, dass bei einem gattungsgemäßen Energiewandler mit mindestens einem Energiespeicher in einem diskontinuierlichen Betriebsmodus am Ende jeder Ansteuerphase durch den Taktgeber bedingt durch weitere parasitäre energiespeichernde Elemente eine Schwingung an dem elektronischen Schaltelement auftritt, deren Phasenlage zum Zeitpunkt des Wiedereinschaltens des elektronischen Schaltelements wesentlich für das Übertragungsverhalten des Energiewandlers ist. Diese Schwingung ist unter zwei Aspekten von größter Bedeutung für das Betriebsverhalten insbesondere bei kleinen Leistungen.

Zum einen lassen sich die Schaltverluste in dem elektronischen Schaltelement nur dann auf das geringstmögliche Maß reduzieren, wenn das Schaltelement zum richtigen Zeitpunkt, das heißt der bestgeeigneten Phasenlage der parasitären Schwingung, wieder eingeschaltet wird.

Zum anderen ergibt sich durch die parasitäre Schwingung allerdings noch ein weitaus bedeutenderer Einfluss auf das Übertragungsverhalten des Energiewandlers insbesondere im Hinblick auf dimmbare LED-Anwendungen. Bei einer üblichen Ansteuerung des elektronischen Schaltelements mit einer konstanten Einschaltzeit ergibt sich bei einem infolge der parasitären Schwingung vorgeladenen Energiespeicher bei Variation der Ergänzungsausschaltzeit eine Änderung in den Anfangsbedingungen des Ladezustands des Energiespeichers. Handelt es sich bei dem Energiespeicher um eine Induktivität, hat dies eine Änderung der Stromzeitfläche zur Folge, im Fall eines Kondensators variiert dementsprechend die Spannungszeitfläche. Dieser Effekt wird dadurch noch verstärkt, dass eine innere Ausschaltzeit in Abhängigkeit eines zunehmenden Ladezustands des Energiespeichers ebenfalls ansteigt. Die innere Ausschaltzeit ist dabei durch die Zeitspanne zwischen dem Ausschalten des elektronischen Schaltelements und dem Zeitpunkt definiert, an dem der Energiespeicher keine Energie mehr an das System abgibt. Beispielsweise kann die innere Ausschaltzeit im Fall einer Induktivität durch Detektion einer Nullstrombedingung (Zero-Current-Detection, ZCD) ermittelt werden. Infolge der variierenden Stromzeitfläche beziehungsweise Spannungszeitfläche können starke Schwankungen der übertragenen Leistung auftreten.

Durch die Verwendung eines konstanten Wertes für die Ergänzungsausschaltzeit, welcher auf die Eigenfrequenz des elektronischen Schaltkreises abgestimmt ist, lässt sich der Einschaltzeitpunkt des elektronischen Schaltelements unabhängig von der aktuell zu übertragenden Leistung nahe an den Punkt für optimale mögliche Schaltentlastung positionieren.

Für den Fall, dass einer der zwei elektrischen Energiespeicher durch eine Induktivität gebildet ist, kann ein weiterer positiver Effekt dann erreicht werden, wenn in einem Minimum oder Maximum der elektrischen Spannung, welche über dem elektronischen Schaltelement anliegt, geschaltet wird. In diesem Fall beträgt der Reststrom in der Induktivität zum Zeitpunkt des Schaltens Null. Dabei ist natürlich das Schalten im Minimum der elektrischen Spannung unter dem Aspekt der Verlustminimierung zu bevorzugen.

Dabei kann der Wert der Ergänzungsausschaltzeit bevorzugt die Hälfte der Periodendauer der systemeigenen elektrischen Schwingung über dem elektronischen Schaltelement annehmen. Weiterhin können sich an den zweiten Leistungsbereich nacheinander beliebig viele weitere Leistungsbereichsabschnitte nahtlos anschließen, wobei in jedem dieser Leistungsbereichsabschnitte jeweils die Ergänzungsausschaltzeit konstant ist. Bevorzugt ist dabei die Ergänzungsausschaltzeit von einem Leistungsbereichsabschnitt zum nächst kleineren Leistungsbereichsabschnitt um ein ganzzahliges Vielfaches einer Schrittweite erhöht, wobei die Schrittweite durch die Periodendauer der über dem elektronischen Schaltelement anliegenden elektrischen Schwingung gegeben ist. Somit kann sich für die Ergänzungsausschaltzeit ein monotoner, treppenförmiger Verlauf über der zu übertragenden Leistung des Energiewandlers, beginnend von dem ersten Leistungsbereich über den kleineren zweiten Leistungsbereich hin zu den daran anschließenden Leistungsbereichsabschnitten mit einer kontinuierlich kleiner werdenden, zu übertragenden Leistung des elektronischen Energiewandlers ergeben.

Bevorzugt kann somit der zweite Zeitgeber dazu ausgelegt sein, in mindestens einem weiteren Leistungsbereich, in dem die zu übertragende Leistung des Energiewandlers kleiner als in dem zweiten Leistungsbereich ist, die Ergänzungsausschaltzeit des elektronischen Schaltelements als konstanten, von Null und von dem ersten Wert verschiedenen weiteren Wert bereitzustellen.

Dabei können sich die genannten Leistungsbereichsabschnitte bis zu der kleinsten, durch den Energiewandler übertragbaren Leistung erstrecken. Es kann allerdings auch vorgesehen sein, einen kleinsten Leistungsbereich freizuhalten, bei welchem die Ermittlung der Ergänzungsausschaltzeit auf einem abweichenden Verfahren beruht.

In einer vorteilhaften Ausführungsform ist der Taktgeber dazu ausgelegt, bei Erreichen eines vorgebbaren Energieinhalts eines der wenigstens zwei elektrischen Energiespeicher einen neuen Taktzyklus zu starten, welcher mit einer zusätzlichen Ausschaltphase des elektronischen Schaltelements mit einer Dauer der Ergänzungsausschaltzeit beginnt, wobei sich an die zusätzliche Ausschaltphase eine Einschaltphase des elektronischen Schaltelements mit einer Dauer der Einschaltzeit anschließt. Somit ergibt sich eine sich wiederholende Abfolge von Ergänzungsausschaltzeit, Einschaltzeit und Ausschaltzeit. Das Erreichen eines vorgebbaren Energieinhalts eines der wenigstens zwei elektrischen Energiespeicher kann beispielsweise durch einen Nulldurchgang eines Stroms einer Induktivität gegeben sein, das heißt, wenn der Strom durch die Induktivität seine Richtung ändert. Dieser Zustand kann beispielsweise durch eine geeignete Beschaltung (Zero-Current-Detection, ZCD) ermittelt werden. Dadurch ergibt sich der Vorteil, dass genau der Beginn der parasitären Schwingung über dem elektronischen Schaltelement erfasst wird und dementsprechend eine genaue Ermittlung des optimalen Wiedereinschaltzeitpunktes möglich wird.

Bevorzugt kann der erste Zeitgeber dazu ausgelegt sein, in dem zweiten Leistungsbereich die Ermittlung der Einschaltzeit unter Berücksichtigung einer an dem ersten Anschluss anliegenden elektrischen Spannung und/oder einer an dem zweiten Anschluss anliegenden elektrischen Spannung auszuführen.

Dadurch ergibt sich die Möglichkeit, in Abhängigkeit der an dem ersten Anschluss beziehungsweise an dem zweiten Anschluss anliegenden Spannung die Einschaltzeit in dem zweiten Leistungsbereich so zu ermitteln, dass sich ein gewünschtes Übertragungsverhalten ergibt. Insbesondere kann es in einem Regelkreis notwendig sein, eine bestimmte Übertragungsfunktion zu realisieren, beispielsweise ein lineares Verhalten. Insbesondere kann ein monotoner Verlauf der Übertragungsfunktion vorteilhaft für die Einstellung eines stabilen Betriebspunkts sein. Die Ermittlung der Spannung kann dabei durch eine entsprechende Messeinrichtung erfolgen. Ebenso kann ein Wert durch einen Parameter eingestellt sein, wenn feststeht, dass ein Gerät beispielsweise nur an einem 12 V-Kraftfahrzeugbordnetz betrieben wird. Des Weiteren kann ein Spannungswert für eine an dem ersten Anschluss beziehungsweise an dem zweiten Anschluss anliegende Spannung aus einem Sollwert eines externen Reglers abgeleitet werden, wenn der externe Regler dazu bestimmt ist, die an dem entsprechenden Anschluss anliegende Spannung auf den mit dem Sollwert korrelierten Spannungswert einzustellen.

Es kann auch vorgesehen sein, die Einschaltzeit in dem zweiten Leistungsbereich nicht direkt zu ermitteln, sondern unter Vorgabe einer Komparatorschwelle aus einem von einem elektrischen oder magnetischen Zustandsmesswert eines Energiespeichers des Energiewandlers durch Vergleich ermittelten binären Signal abzuleiten. Dabei kann die Komparatorschwelle dem Grunde nach den gleichen Verlauf wie eine direkt einzustellende Einschaltzeit aufweisen. Vorteilhaft an einer derartigen indirekten Steuerung der Einschaltzeit, welche gleichzeitig eine Schutzwirkung entfaltet, ist die verbesserte Ausnutzung des elektrischen Energiespeichers. Im Falle einer Induktivität kann so beispielsweise eine Übersteuerung in den Sättigungsbereich verhindert werden.

Bevorzugt kann der erste Zeitgeber dazu ausgelegt sein, eine Spannungsform der an dem ersten Anschluss anliegenden elektrischen Spannung zu ermitteln, um die Ermittlung der Einschaltzeit in dem zweiten Leistungsbereich in Abhängigkeit der ermittelten Spannungsform auszuführen. Spannungsformen unter diesem Aspekt sind neben Gleichspannung auch aus einer beliebigen Wechselspannung, insbesondere mittelwertfreie Wechselspannung, beispielsweise mit einem sinus-, rechteck-, dreieck- oder trapezförmigen Verlauf, durch Gleichrichtung erzeugte unipolare Spannungen, sowie Mischformen.

Infolgedessen kann der Energiewandler dazu ausgelegt sein, sowohl an einer Gleichspannung als auch an einer Wechselspannung, beispielsweise 230 V∼/50 Hz, betrieben zu werden, wobei der erste Zeitgeber dazu ausgelegt sein kann, zwischen einem Gleichspannungsbetrieb (DC) und einem Wechselspannungsbetrieb (AC) zu unterscheiden und in Abhängigkeit der AC/DC-Unterscheidung eine jeweils geeignete Methode für die Ermittlung der Ergänzungsausschaltzeit anzuwenden, beispielsweise in Form einer jeweils optimierten Berechnungsvorschrift. Dadurch ergibt sich der Vorteil, dass der Energiewandler auch bei Speisung mit unterschiedlichen Spannungsformen ein vergleichbares Übertragungsverhalten aufweisen kann, ohne dass ein Eingriff in den Energiewandler erforderlich wäre. Hierbei ist das Übertragungsverhalten durch die Korrelation zwischen dem ersten Signal, welches sowohl den ersten Zeitgeber als auch den zweiten Zeitgeber steuert, und der durch den Energiewandler übertragenen Leistung gegeben.

Verfahrensseitig kann erfindungsgemäß dann ein Wechsel von dem ersten Leistungsbereich in den zweiten Leistungsbereich ausgeführt werden, wenn die Einschaltzeit in dem ersten Leistungsbereich den Wert einer vorgebbaren minimalen Einschaltzeit unterschreitet. Mittels der verlängerten Einschaltzeit und der zusätzlich eingesetzten Ergänzungsausschaltzeit kann eine niedrigere Betriebsfrequenz realisiert werden. Der Wert der minimalen Einschaltzeit kann dabei in Abhängigkeit der an dem ersten Anschluss anliegenden elektrischen Spannung und/oder der an dem zweiten Anschluss anliegenden elektrischen Spannung bestimmt werden. Insbesondere kann vorgesehen sein, den Wert der minimalen Einschaltzeit direkt in Abhängigkeit der an dem zweiten Anschluss anliegenden elektrischen Spannung zu ermitteln.

Durch eine gleichzeitige, abgestimmte Änderung der Einschaltzeit und der Ergänzungsausschaltzeit beim Wechsel von dem ersten Leistungsbereich in den zweiten Leistungsbereich erfolgt ein stetiger Übergang der durch den Energiewandler übertragenen Leistung insbesondere ohne Knicke oder Sprünge. Dabei kann vorgesehen sein, dass der Wechsel zurück von dem zweiten Leistungsbereich in den ersten Leistungsbereich mit einer Hysterese ausgeführt wird, wodurch ein permanenter Wechsel zwischen den beiden Bereichen vermieden wird. Dadurch kann auch insbesondere im Falle einer durch technische Einschränkungen gegebenen Unstetigkeit der Übertragungskennlinie der durch den Energiewandler zu übertragenden Leistung in Abhängigkeit von dem ersten Signal, beispielsweise durch begrenzte Auflösung für die Einschaltzeit oder die Ergänzungsausschaltzeit bei Implementierung in einem diskret arbeitenden System, ein permanentes Hin- und Herspringen zwischen den beiden Leistungsbereichen mit entsprechender Variation der übertragenen Leistung des Energiewandlers vermieden werden. Ein solcher wiederholter Bereichswechsel könnte sich insbesondere bei Verwendung einer LED als angeschlossenen Verbraucher nachteilig auf die Stabilität des erzeugten Lichts auswirken.

Zweckmäßigerweise wird dabei bei einer kontinuierlichen Leistungserhöhung mit einem Wechsel von dem zweiten Leistungsbereich in den ersten Leistungsbereich beim Eintritt in den ersten Leistungsbereich ein Wert für die Einschaltzeit deutlich größer als die minimale Einschaltzeit eingestellt.

Weiterhin kann vorgesehen sein, dass in einem dritten Leistungsbereich, in welchem die zu übertragende Leistung des Energiewandlers kleiner ist als in dem zweiten Leistungsbereich, die zu übertragende Leistung des Energiewandlers mittels einer konstanten Einschaltzeit und mittels einer mit abnehmender Leistung zunehmenden Ergänzungsausschaltzeit eingestellt wird. Dabei muss sich der dritte Leistungsbereich nicht zwingend direkt an den zweiten Leistungsbereich anschließen. Vielmehr kann auch vorgesehen sein, dass zwischen dem dritten Leistungsbereich und dem zweiten Leistungsbereich mindestens ein weiterer Leistungsbereich eingefügt ist, in welchem ein anderes Steuerverfahren, bevorzugt in der Art des Steuerverfahrens, wie es im zweiten Leistungsbereich angewendet wird, ausgeführt wird. Ein solches Verfahren kann besonders vorteilhaft bei einem solchen Energiewandler eingesetzt werden, bei welchem die parasitäre elektrische Schwingung über dem elektronischen Schaltelement stark gedämpft ist.

In einer erfindungsgemäßen Weiterbildung des zuvor genannten Verfahrens kann in einem vierten Leistungsbereich, in welchem die zu übertragende Leistung des Energiewandlers kleiner als in dem zweiten Leistungsbereich und größer als im dritten Leistungsbereich ist, die Ergänzungsausschaltzeit als konstant und größer als die Ergänzungsausschaltzeit im zweiten Leistungsbereich festgelegt werden. Insbesondere kann sich dabei der vierte Leistungsbereich direkt an den zweiten Leistungsbereich anschließen. Des Weiteren können der vierte Leistungsbereich und der dritte Leistungsbereich direkt aneinander angrenzen. Es kann jedoch auch vorgesehen sein, zwischen dem vierten Leistungsbereich und dem dritten Leistungsbereich noch beliebig viele weitere Leistungsbereiche einzufügen, bei welchen jeweils mit kleiner werdender, zu übertragender Leistung des Energiewandlers eine zunehmende, konstante Ergänzungsausschaltzeit in dem jeweiligen Leistungsbereich eingestellt wird.

In einer vorteilhaften Weiterbildung dieses Verfahrens kann bei einem Wechsel von dem zweiten Leistungsbereich in den vierten Leistungsbereich die Ergänzungsausschaltzeit um einen vorgebbaren Wert erhöht und bei einem Wechsel von dem vierten Leistungsbereich in den dritten Leistungsbereich die Ergänzungsausschaltzeit um den vorgebbaren Wert erniedrigt werden. Besonders vorteilhaft ist dabei die Einstellung des vorgebbaren Werts auf eine Periodendauer der an dem elektronischen Schaltelement anliegenden elektrischen Schwingung. Dadurch wird bei Verlängerung der Ergänzungsausschaltzeit um den vorgebbaren Wert wieder in der gleichen Phasenlage der parasitären Schwingung das Schaltelement eingeschaltet. Somit erfolgt auch bei verlängerter Ergänzungsausschaltzeit der Schaltvorgang wieder im Optimum zur bestmöglichen Schaltentlastung des elektronischen Schaltelements und in dem bevorzugten Energiespeicherzustand eines der zwei Energiespeicher, wodurch eine gleichmäßige Energieübertragung gewährleistet ist. Dadurch, dass die Schaltvorgänge in beiden Leistungsbereichen, das heißt dem zweiten Leistungsbereich und dem vierten Leistungsbereich, auf den gleichen Anfangszustand des besagten Energiespeichers einwirken, kann der Verlauf der zu übertragenden Leistung im Übergang von dem zweiten Leistungsbereich in den vierten Leistungsbereich stetig gestaltet werden.

In einer besonders vorteilhaften Ausführungsform des erfindungsgemäßen Verfahrens kann die Einschaltzeit in dem zweiten Leistungsbereich derart in Abhängigkeit eines ersten Signals, mittels dem eine zu übertragende Leistung des Energiewandlers eingestellt wird, ermittelt werden, dass die zu übertragende Leistung von dem ersten Signal in gleicher Weise abhängt, wie wenn die zu übertragende Leistung analog zu dem ersten Leistungsbereich gesteuert werden würde. Die Grenze zwischen dem ersten Leistungsbereich und dem zweiten Leistungsbereich wird dabei indirekt über die Festlegung der minimalen Einschaltzeit bestimmt. Die vorgenannte Einstellvorschrift für die Einschaltzeit ist gleichbedeutend mit der Forderung nach einer identischen Übertragungscharakteristik von der unteren Leistungsgrenze des zweiten Leistungsbereichs bis zur Obergrenze des ersten Leistungsbereichs unabhängig von der Dimensionierung der Einschaltzeit. Letzteres bedeutet nichts anderes, als den ersten Leistungsbereich auf den zweiten Leistungsbereich derart auszudehnen, dass das aus dem ersten Signal durch den ersten Zeitgeber erzeugte zweite Signal nicht zu einem größeren Wert hin korrigiert wird, und das aus dem ersten Signal durch den zweiten Zeitgeber erzeugte dritte Signal eine Ergänzungsausschaltzeit von Null repräsentiert. Die vergleichende Betrachtung entspricht einer Parametrierung des ersten Zeitgebers und des zweiten Zeitgebers mit einer minimalen Einschaltzeit von Null, was gleichbedeutend ist mit dem Verschwinden des zweiten Leistungsbereichs, welcher vollständig in dem ersten Leistungsbereich aufgeht.

Für den Spezialfall, dass der erste Zeitgeber das erste Signal direkt als zweites Signal weiterreicht und gegebenenfalls das zweite Signal auf den höheren Wert für die Einschaltzeit korrigiert, sodass das zweite Signal nie kleiner werden kann als die minimale Einschaltzeit, kann das erste Signal im zweiten Leistungsbereich als fiktive Einschaltzeit betrachtet werden. Somit ist die Ermittlung der Einschaltzeit so durchzuführen, dass sich die gleiche Leistungsübertragung des Energiewandlers ergibt, wie wenn die fiktive Einschaltzeit direkt an den Taktgeber bereitgestellt würde und keine Ergänzungsausschaltzeit eingefügt würde. Bei Anwendung dieser Methode zur Ermittlung der Einschaltzeit ergibt sich zwangsläufig im Übergang von dem ersten Leistungsbereich in den zweiten Leistungsbereich eine stetige und glatte Kurve, welche den Zusammenhang zwischen dem ersten Signal und der übertragenen Leistung des Energiewandlers charakterisiert, das heißt, die Kurve weist bei einem Erreichen der Einschaltzeitbegrenzung keinen Knick auf.

In einer besonders vorteilhaften Ausführung des erfindungsgemäßen Verfahrens kann bei einem mit einem Wechsel des Leistungsbereichs verbundenen kontinuierlichen Ändern der zu übertragenden Leistung ein Ändern der Leistungsübertragung des Energiewandlers stufenlos erfolgen. Hierdurch können insbesondere Unstetigkeiten in der Übertragungsfunktion vermieden werden, was besonders vorteilhaft für die Benutzung eines überlagerten Regelkreises ist. Insbesondere bei Lichtanwendungen ist es von großer Bedeutung, dass die Übertragungsfunktion des Energiewandlers möglichst glatt und ohne ausgeprägte Sprünge ausgebildet ist, um eine aufwendige Nachregelung der übertragenen Leistung zu vermeiden.

In einer bevorzugten Ausführungsform des erfindungsgemäßen Verfahrens kann die Einschaltzeit in dem zweiten Leistungsbereich unter Berücksichtigung einer konstanten Spannungsamplitude und einer konstanten Kurvenform für eine elektrische Spannung einer am Energiewandler angeschlossenen Energiequelle und einer durch den Energiewandler bereitgestellten elektrischen Spannung für einen an den Energiewandler angeschlossenen Verbraucher so ermittelt werden, dass die Einschaltzeit ausschließlich von der zu übertragenden Leistung abhängt. Diese Maßnahme erlaubt es, dass das Ermitteln der Einschaltzeit in dem zweiten Leistungsbereich erheblich vereinfacht werden kann. Dadurch kann eine sehr schnelle Ermittlung der Einschaltzeit in dem zweiten Leistungsbereich realisiert werden, und es kann darüber hinaus eine besonders einfache Steuerung beziehungsweise Regelung des Energiewandlers im Betrieb im zweiten Leistungsbereich erreicht werden.

Beispielsweise kann vorgesehen sein, dass stationäre Verhältnisse mit einem konstanten Wert für die elektrische Spannung der am Energiewandler angeschlossenen Energiequelle gleichbedeutend sind, wobei der konstante Wert für die elektrische Spannung ein Mittelwert, ein Effektivwert oder dergleichen sein kann. Darüber hinaus kann der Wert mittels eines Faktors angepasst sein, um einen zuverlässigen Betrieb und eine zuverlässige Berechnung der Einschaltzeit in dem zweiten Leistungsbereich zu erreichen. Dem Grunde nach das Gleiche gilt für die durch den Energiewandler bereitgestellte elektrische Spannung.

Darüber hinaus wird vorgeschlagen, dass der Energiewandler eingangsseitig mit einer Wechselspannung beaufschlagt und derart gesteuert wird, dass ein eingangsseitiger Leistungsfaktor maximiert wird. Dies erlaubt es, Rückwirkungen auf die Energiequelle, die in diesem Fall eine Wechselspannungsquelle ist, zu reduzieren. Insbesondere kann dieses Merkmal als Leistungsfaktor-Steuerung beziehungsweise Leistungsfaktor-Regelung (PFC) ausgebildet sein.

In einer bevorzugten Weiterbildung kann die Einschaltzeit und/oder die Ergänzungsausschaltzeit bei einer konstanten, zu übertragenden Leistung des Energiewandlers innerhalb einer halben oder ganzen Periode der eingangsseitig verwendeten Wechselspannung als konstant festgelegt werden. Dadurch ergibt sich die gleiche einfache Steuerstruktur wie im Fall einer Gleichspannung, lediglich die Methode für die Ermittlung des die Einschaltzeit repräsentierenden zweiten Signals als Funktion des ersten Signals im zweiten Leistungsbereich unterscheidet sich von dem Fall einer jeweils an dem ersten Anschluss und an dem zweiten Anschluss anliegenden Gleichspannung. Bevorzugt kann dabei anstelle einer aufwendigen Berechnung während des Betriebs das zweite Signal aus dem ersten Signal mit Hilfe einer Wertetabelle ermittelt werden. Insbesondere kann die Tabelle nichtlinear aufgebaut sein, wobei Funktionsbereiche mit wenigen Änderungen durch Stützstellen mit größeren Abständen und Funktionsbereiche mit starken Änderungen durch Stützstellen mit engeren Abständen hinterlegt sind. Zwischenwerte können dann auf einfache Art und Weise mit guter Genauigkeit durch Interpolation gewonnen werden.

### Kurze Beschreibung der Zeichnungen

Weitere Vorteile und Merkmale sind den in der folgenden Beschreibung dargestellten Ausführungsbeispielen zu entnehmen. In den Figuren bezeichnen gleiche Bezugszeichen gleiche Merkmale und Funktionen.
Es zeigen:
- Fig. 1: ein schematisches Prinzipschaltbild für einen getakteten elektronischen Energiewandler als Hochsetzsteller,
- Fig. 2: zwei Diagramme, die schematisch ein Signalmuster zur Ansteuerung der Schaltung nach Fig. 1 darstellen,
- Fig. 3: ein Diagramm, welches schematisch Graphen darstellt, welche beispielhaft den Verlauf der Einschaltzeit und der Ergänzungsausschaltzeit in Abhängigkeit einer zu übertragenden Leistung des Energiewandlers repräsentieren,

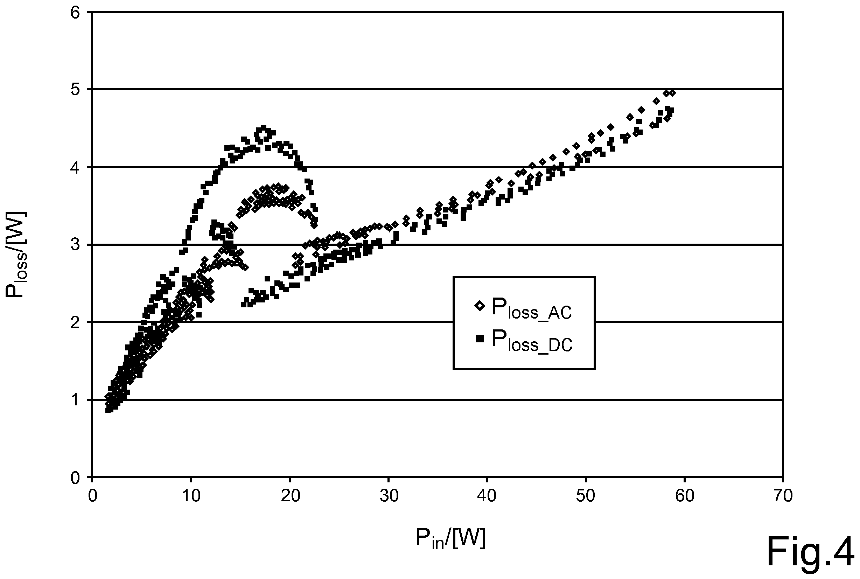

- Fig. 4: ein Diagramm mit zwei Graphen, welches sowohl für Wechselspannungs- als auch für Gleichspannungsversorgung die Verlustleistung eines Mustergeräts in Abhängigkeit der gesamten aufgenommenen Leistung angibt,
- Fig. 5: die Drain-Source-Spannung gemessen an einem Mustergerät bei wiederholtem harten Einschalten mit einer zusätzlichen Totzeit von circa 10 µs,
- Fig. 6: die Drain-Source-Spannung gemessen an einem Mustergerät mit einer ersten Eingangsspannung,
- Fig. 7: die Drain-Source-Spannung gemessen an einem Mustergerät mit einer zweiten Eingangsspannung,
- Fig. 8: die Drain-Source-Spannung gemessen an einem Mustergerät mit einer dritten Eingangsspannung,
- Fig. 9: die Drain-Source-Spannung gemessen an einem Mustergerät mit einer vierten Eingangsspannung,
- Fig. 10: eine schematische Unterteilung einer Sinus-Halbwelle in Bereiche mit unterschiedlichem Schwingungsverhalten des Spannungsverlaufs an dem elektronischen Schaltelement,
- Fig. 11: Strom- und Spannungsverläufe gemessen an einem Mustergerät, wobei das Einschalten des elektronischen Schaltelements näherungsweise im Maximum des Stroms durch eine Induktivität erfolgt,
- Fig. 12: Strom- und Spannungsverläufe gemessen an einem Mustergerät, wobei das Einschalten des elektronischen Schaltelements näherungsweise im Nulldurchgang des Stroms durch eine Induktivität erfolgt,
- Fig. 13: ein schematisches Prinzipschaltbild für einen getakteten elektronischen Energiewandler als Tiefsetzsteller,
- Fig. 14: schematisch ein Schaltbild eines Energiewandlers wie in Fig. 1 dargestellt, jedoch ergänzt um eine Steuereinheit,
- Fig. 15: ein Diagramm, in dem schematisch zwei Graphen dargestellt sind, welche beispielhaft den Verlauf der Einschaltzeit und der Ergänzungsausschaltzeit in Abhängigkeit einer zu übertragenden Leistung des Energiewandlers gemäß einem ersten Ausführungsbeispiel der Erfindung repräsentieren, und
- Fig. 16: ein Diagramm, in dem schematisch zwei Graphen dargestellt sind, welche beispielhaft den Verlauf der Einschaltzeit und der Ergänzungsausschaltzeit in Abhängigkeit einer zu übertragenden Leistung des Energiewandlers gemäß einem zweiten Ausführungsbeispiel der Erfindung repräsentieren.

### Bevorzugte Ausführung der Erfindung

Ein gattungsgemäßer Energiewandler kann dem Grunde nach in unterschiedlichen Betriebsmodi betrieben werden, so beispielsweise in einem Continuous-Modus, einem Transition-Modus, einem Discontinuous-Modus und einem Burst-Modus. Insbesondere kann in dem ersten Leistungsbereich der Transition-Modus vorliegen, das heißt der Betrieb an einer Lück-Grenze, an welcher beispielsweise der Strom in einem als Induktivität ausgebildeten Energiespeicher gerade zu Null wird. In dem zweiten Bereich liegt dann der Discontinuous-Modus vor, das heißt der Energiewandler arbeitet dann im lückenden Betrieb.

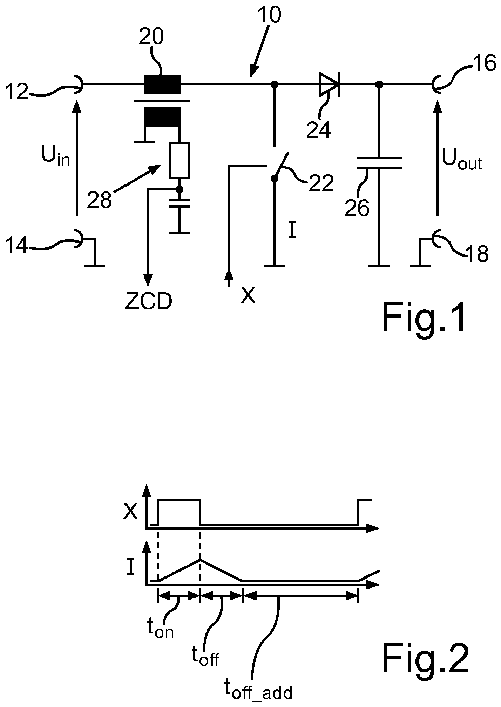

Ein Energiewandler der gattungsgemäßen Art ist hinsichtlich der Grundschaltung als Schaltbild schematisch in Fig. 1 dargestellt. Fig. 1 zeigt einen getakteten elektronischen Energiewandler 10 als Hochsetzsteller mit einem Eingangsanschluss, der Anschlussklemmen 12, 14 aufweist, zwischen denen eine Eingangsspannung Uᵢₙ einer nicht dargestellten Energiequelle anliegt. Darüber hinaus weist der Energiewandler 10 einen Ausgangsanschluss mit Anschlussklemmen 16, 18 auf, zwischen denen eine Ausgangsspannung Uₒᵤₜ für eine nicht dargestellte elektrische Energiesenke anliegt. Die Anschlussklemme 14 und die Anschlussklemme 18 sind elektrisch leitend miteinander verbunden und bilden vorliegend ein elektrisches Bezugspotential. Die Eingangsspannung Uᵢₙ und die Ausgangsspannung Uₒᵤₜ sind somit nicht galvanisch getrennt. Bei alternativen Schaltungstopologien kann eine galvanische Trennung zwischen den Anschlussklemmen 12 und 14 sowie den Anschlussklemmen 16 und 18 vorgesehen sein. Für das Prinzip der Erfindung ist dies jedoch nicht wesentlich.

Die Anschlussklemme 12 ist an einem ersten Anschluss einer Induktivität 20 angeschlossen, die mit ihrem zweiten Anschluss an ein elektronisches Schaltelement, hier ein MOSFET 22, sowie an einer Anode einer Diode 24 angeschlossen. Der MOSFET 22 ist mit seinem Drain-Anschluss an die Induktivität 20 angeschlossen. Sein Source-Anschluss ist mit den Anschlussklemmen 14 und 18 elektrisch leitend verbunden.

Eine Kathode der Diode 24 ist an einem ersten Anschluss eines Zwischenkreiskondensators 26 angeschlossen, der seinerseits an die Anschlussklemme 16 angeschlossen ist. Mit seinem zweiten Anschluss ist der Zwischenkreiskondensator 26 an die Anschlussklemmen 14 und 18 angeschlossen. Die Ausgangsspannung an den Anschlussklemmen 16, 18 entspricht also der Zwischenkreisspannung am Zwischenkreiskondensator 26.

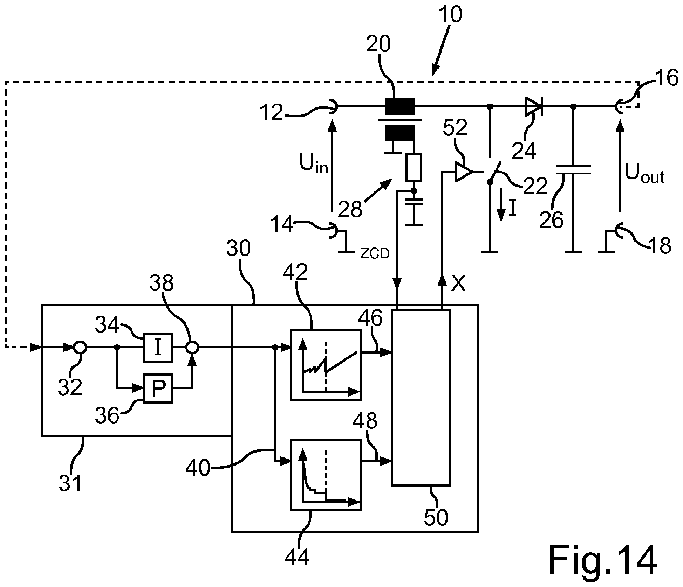

An die Induktivität 20 ist ferner eine Detektionseinheit 28 magnetisch angekoppelt, mittels der ermittelt werden kann, wann die Induktivität 20 keine Energie mehr enthält. Die Detektionseinheit 28 weist einen nicht bezeichneten Anschluss für ein Signal ZCD (Zero-Crossing-Detection) auf, das einer in dieser Fig. nicht dargestellten Steuereinheit 30 (Fig. 14) zugeführt wird. Die Steuereinheit 30 liefert ferner ein Signal X, das einem Gate-Anschluss des MOSFET 22 zugeführt wird, mittels dem der MOSFET 22 im Schaltbetrieb betrieben werden kann.

Fig. 2 zeigt in zwei Diagrammen schematische Signalverläufe, die einen Betrieb im zweiten Leistungsbereich darstellen. Zu erkennen ist aus dem oberen Diagramm der Fig. 2, dass das Signal X, welches am Gate-Anschluss des MOSFET 22 anliegt, den MOSFET 22 nur für einen vergleichsweise kleinen Zeitraum, nämlich der Einschaltzeit tₒₙ, welche hier gleich einer minimalen Einschaltzeit t_{on_min} sein kann, einschaltet. In diesem Zeitraum steigt der Strom I durch die Induktivität 20 im Wesentlichen linear an, was aus dem zweiten unteren Diagramm der Fig. 2 ersichtlich ist. Am Ende der durch das Signal X definierten Einschaltzeit tₒₙ wird der MOSFET 22 ausgeschaltet, und der Strom I durch die Induktivität 20 nimmt bis auf den Wert Null ab, was im zweiten unteren Diagramm der Fig. 2 mit der Ausschaltzeit t_{off} gekennzeichnet ist.

Im Transition-Modus würde sich nun ein neuer Zyklus mit einer neuen Einschaltzeit tₒₙ des Signals X anschließen, sofern eine Leistung im ersten Leistungsbereich einzustellen ist. In Fig. 2 ist jedoch eine Leistung einzustellen, die im zweiten Leistungsbereich ist. Aus der US 2012/0286686 A1 ist bekannt, in dem zweiten Leistungsbereich die Einschaltzeit tₒₙ konstant zu halten.

Zugleich ist in diesem Betriebszustand eine Ergänzungsausschaltzeit t_{off_add} eingefügt, die sich an die Ausschaltzeit t_{off} anschließt. Nach Ablauf der Ergänzungsausschaltzeit t_{off_add} erfolgt ein neuer Einschaltzyklus.

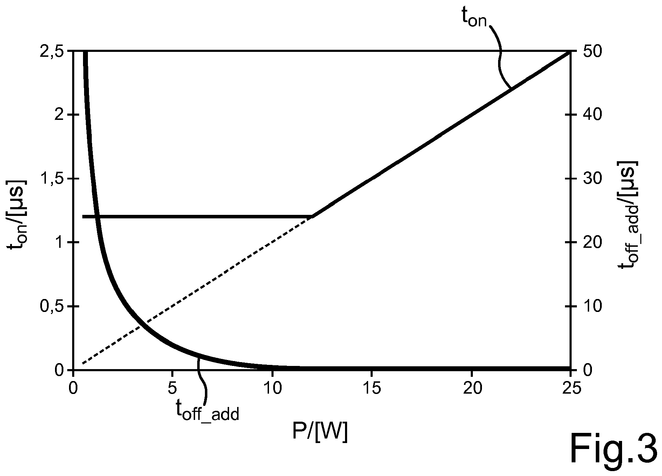

Fig. 3 zeigt ein Diagramm, in dem schematisch zwei Graphen dargestellt sind, welche den Verlauf der Einschaltzeit tₒₙ des elektronischen Schaltelements des Energiewandlers sowie der Ergänzungsausschaltzeit t_{off_add} in Abhängigkeit einer zu übertragenden Leistung P des Energiewandlers darstellen. Hierbei wird mit abnehmender, zu übertragender Leistung P des Energiewandlers die Einschaltzeit tₒₙ so lange verkleinert, bis diese den Wert der minimalen Einschaltzeit t_{on_min} erreicht, welche in dem Diagramm beispielhaft zu 1,2 µs gesetzt wurde. In dem vorliegenden Beispiel beträgt die Grenze der zu übertragenden Leistung P des Energiewandlers zwischen dem ersten Leistungsbereich und dem zweiten Leistungsbereich 12 W. Die Fortsetzung der Einschaltzeit tₒₙ in dem zweiten Leistungsbereich unter der Annahme einer Nichtbegrenzung ist gestrichelt angedeutet. Zur Erzielung eines Übertragungsverhaltens der zu übertragenden elektrischen Energie des Energiewandlers in dem zweiten Leistungsbereich mit einer fest eingestellten Einschaltzeit tₒₙ, welches genau gleich sein soll wie bei einer Steuerung mit einer nicht begrenzten Einschaltzeit tₒₙ gemäß der gestrichelt fortgesetzten Linie, ist eine Ergänzungsausschaltzeit t_{off_add} einzuführen, welche den in dem Diagramm dargestellten Verlauf aufweisen kann. Dieser beträgt insbesondere in dem ersten Leistungsbereich 0 µs und nimmt kontinuierlich ausgehend von der Grenze des ersten Leistungsbereichs zum zweiten Leistungsbereich mit abfallender Leistung P kontinuierlich zu. Die Leistung ist hier beispielhaft skaliert von 0 W bis 25 W und einer Unterteilung in 5 W-Schritten, auf der linken Ordinate ist die Einschaltzeit tₒₙ in µs zwischen 0 µs und 2,5 µs in Schritten von 0,5 µs aufgetragen, die Ergänzungsausschaltzeit t_{off_add} ist an der rechten Hochachse im Bereich von 0 µs bis 50 µs mit Teilstrichbeschriftungen im Abstand von 10 µs aufgetragen Das vorliegende Diagramm dient lediglich der Veranschaulichung des Betriebsverfahrens, insbesondere sind die gewählten Parameter nicht verbindlich für die nachfolgenden Ausführungen.

Eine Messung des Wirkungsgrads an einem Mustergerät, welches nach dem zuvor genannten Verfahren betrieben wird, bei verschiedenen Eingangsleistungen Pᵢₙ jeweils bei Wechselspannungs-(AC-) und Gleichspannungs- (DC-) Betrieb offenbart eine Schwachstelle des Konzepts beim Betrieb mit einer kontinuierlich größer werdenden Ergänzungsausschaltzeit t_{off_add}. Es kann eine Erhöhung der Verluste im Leistungsbereich zwischen 10 W und 23 W festgestellt werden. Ein Satz von Messwerten der Verlustleistung eines vollständigen elektronischen Vorschaltgeräts (EVG), welches einen Hochsetzsteller mit Leistungsfaktorkorrektur am Eingang und einen Tiefsetzsteller am Ausgang beinhaltet, sind in Abhängigkeit der Eingangsleistung an dem Eingang des elektronischen Vorschaltgeräts dargestellt. Dabei sind Messwerte im DC-Betrieb P_{loss_DC} mit ausgefüllten Quadraten und Messwerte im AC-Betrieb P_{loss_AC} mit nicht ausgefüllten Rauten symbolisiert. Die Eingangsleistung Pᵢₙ ist dabei im Bereich von 0 W bis 70 W skaliert, wobei Teilstrichbeschriftungen im Abstand von 10 W eingetragen sind. Des Weiteren ist die Verlustleistung Pₗₒₛₛ an der Ordinate im Bereich von 0 W bis 6 W aufgetragen, wobei die Teilstrichbeschriftungen im Abstand von 1 W eingetragen sind. Die Anwendung des Steuerprinzips mit kontinuierlich größer werdender Ergänzungsausschaltzeit t_{off_add} zeigt eine erhöhte Verlustleistung im Teillastbereich. Mit Messwerten belegt ist der Bereich zwischen circa 1,5 W Eingangsleistung Pᵢₙ und circa 60 W Eingangsleistung Pᵢₙ. Bei Eingangsleistungen Pᵢₙ größer circa 22 W ist ein näherungsweise linearer Zusammenhang zwischen der Eingangsleistung Pᵢₙ und der Verlustleistung Pₗₒₛₛ zu beobachten. Bei kleinerer Eingangsleistung Pᵢₙ ist eine deutliche Ausbeulung der Verlustleistung Pₗₒₛₛ hin zu größeren Werten zu verzeichnen, im Extremfall ergibt sich bei circa 15 W Eingangsleistung Pᵢₙ circa 4,3 W Verlustleistung Pₗₒₛₛ anstelle bei ungefähr linearer Fortsetzung zu erwartender 2,2 W. Bei weiter reduzierter Leistung im Bereich kleiner circa 10 W Eingangsleistung Pᵢₙ findet wieder eine verstärkte Annäherung an den theoretisch zu erwartenden Verlauf statt. Dabei fallen die zusätzlichen Verluste hauptsächlich im Hochsetzsteller an. Dies wurde durch Temperaturmessung an dem MOSFET 22 des Hochsetzstellers geprüft.

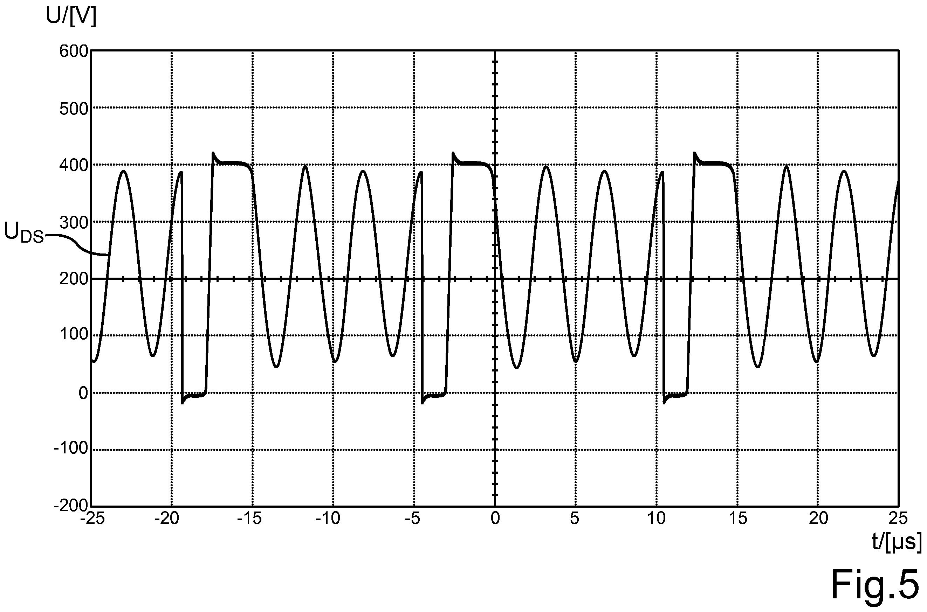

In dem Discontinuous-Modus, das heißt im lückenden Betrieb des Stroms durch die Induktivität 20, schwingt die Spannung über dem elektronischen Schaltelement in der konkret vorliegenden Form des MOSFET 22 nach dem Ausschalten mit einer Frequenz, welche sich aus der Kapazität des ausgeschalteten MOSFET 22, der Diode 24 und dem Induktivitätswert der Induktivität 20 ergibt. Den beispielhaften Verlauf einer gemessenen Drain-Source-Spannung über dem MOSFET 22 zeigt Fig. 5 mit einer horizontalen Einteilung von 5 µs pro eingezeichnetem Skalierungsabschnitt und einer vertikalen Einteilung von 100 V pro eingezeichnetem Skalierungsabschnitt. Der Kurvenverlauf zeigt hierbei ein wiederholtes hartes Einschalten bei einer zusätzlichen Ergänzungsausschaltzeit t_{off_add} von circa 10 µs. Hartes Einschalten bedeutet in diesem Zusammenhang, dass das Einschalten zu einem Zeitpunkt erfolgt, an welchem die Spannung über der Drain-Source-Strecke des MOSFET 22 nahe an der zuvor anliegenden maximalen Spannung liegt. Dabei wird die wirksame Kapazität, welche sich aus der Kapazität des ausgeschalteten MOSFET 22 sowie weiterer parasitärer Kapazitäten der umliegenden Bauelemente ergibt, schlagartig durch den einschaltenden MOSFET 22 entladen und die darin enthaltene Energie in dem MOSFET 22 in Verlustwärme umgesetzt. Für die Schwingung gelten dabei folgende Gesetzmäßigkeiten: Die Frequenz ergibt sich aus der Kapazität des ausgeschalteten MOSFET 22, der Diode 24 und dem Induktivitätswert der Induktivität 20. Die maximale Amplitude der Schwingung ergibt sich aus der Differenz der Ausgangsspannung Uₒᵤₜ und der Eingangsspannung Uᵢₙ, der Mittelwert der Schwingung entspricht der Eingangsspannung Uᵢₙ. Je nach Eingangsspannung Uᵢₙ und Ausgangsspannung Uₒᵤₜ sind drei für die Verlustleistung Pₗₒₛₛ relevante Fälle unterscheidbar.

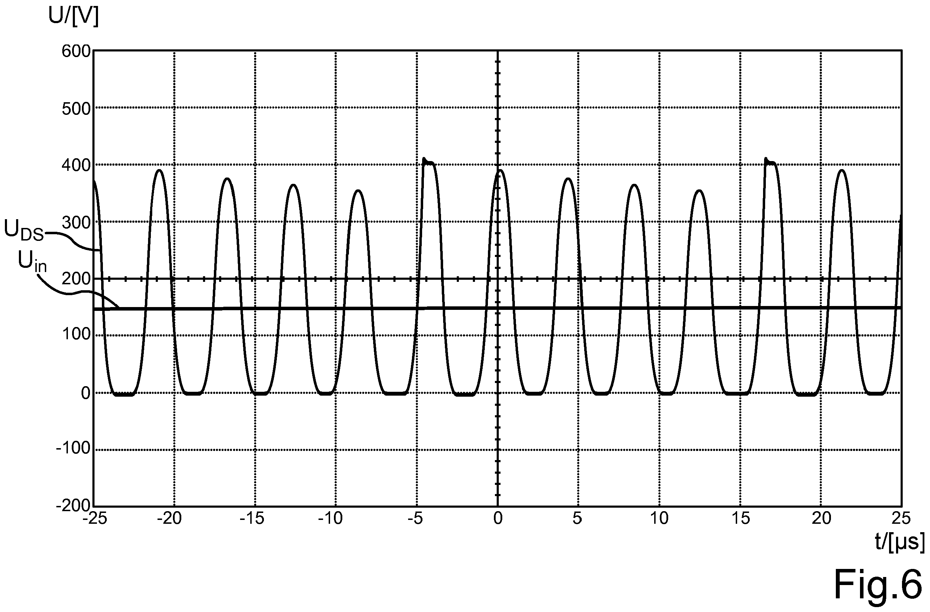

Fig. 6 zeigt den Spannungsverlauf einer Schwingung über dem MOSFET 22, wobei die Eingangsspannung Uᵢₙ kleiner ist als die halbe Ausgangsspannung Uₒᵤₜ, welche in diesem Fall eine Zwischenkreisspannung darstellt. Dabei beträgt die Eingangsspannung Uᵢₙ 150 V, die Ausgangsspannung Uₒᵤₜ 400 V. Die Schwingung erreicht mit jedem Minimum wieder die 0 V-Grenze. Dadurch wird ein schaltentlasteter Betrieb in Form des sogenannten Zero-Voltage-Switching (ZVS) des MOSFET 22 möglich.

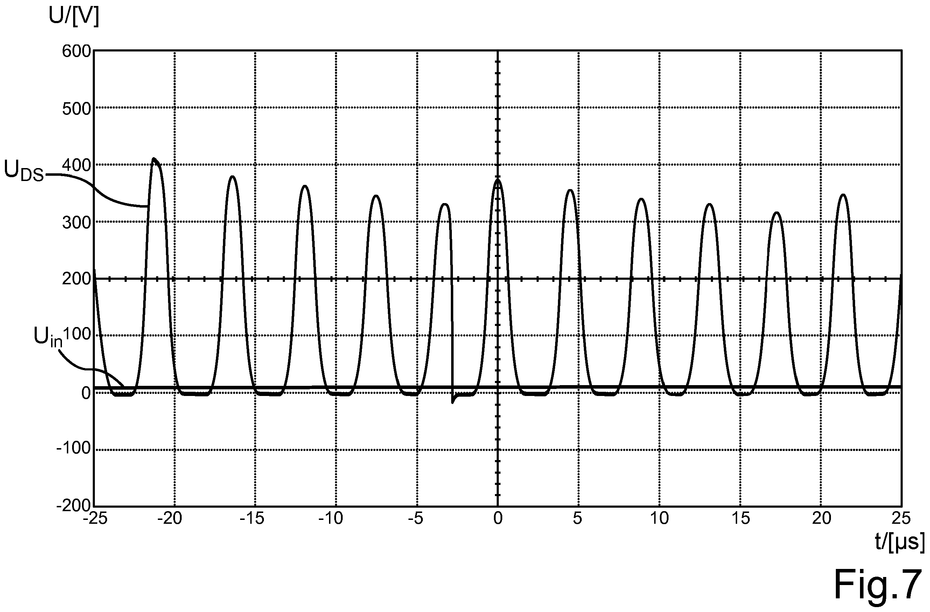

Fig. 7 zeigt den Verlauf der Drain-Source-Spannung an dem MOSFET 22 bei einer Eingangsspannung Uᵢₙ gleich 11 V. Bei einer sehr kleinen Eingangsspannung wie in dem dargestellten Fall wird die Spannung im Minimum der Schwingung auf 0 V geklemmt. Damit wird der Bereich, in dem entlastetes Schalten möglich ist, breiter. Die Klemmung der Spannung auf 0 V erfolgt dabei durch die in einem MOSFET typbedingt integrierte antiparallele Body-Diode.

Dies bedeutet, dass die Bereiche, in welchen es zu hohen Schaltverlusten aufgrund einer ungünstig gewählten Ergänzungsausschaltzeit t_{off_add} kommt, weniger beziehungsweise unwahrscheinlicher werden. Trotzdem sind an einzelnen Punkten noch höhere Schaltverluste möglich. Diese Punkte werden aber mit geringerer Wahrscheinlichkeit getroffen.

Da ein übergeordneter PFC-Regler permanent arbeitet und es so immer wieder zu kleinen Änderungen der Einstellungen kommt, erscheint eine statistische Betrachtung für die Analyse zulässig.

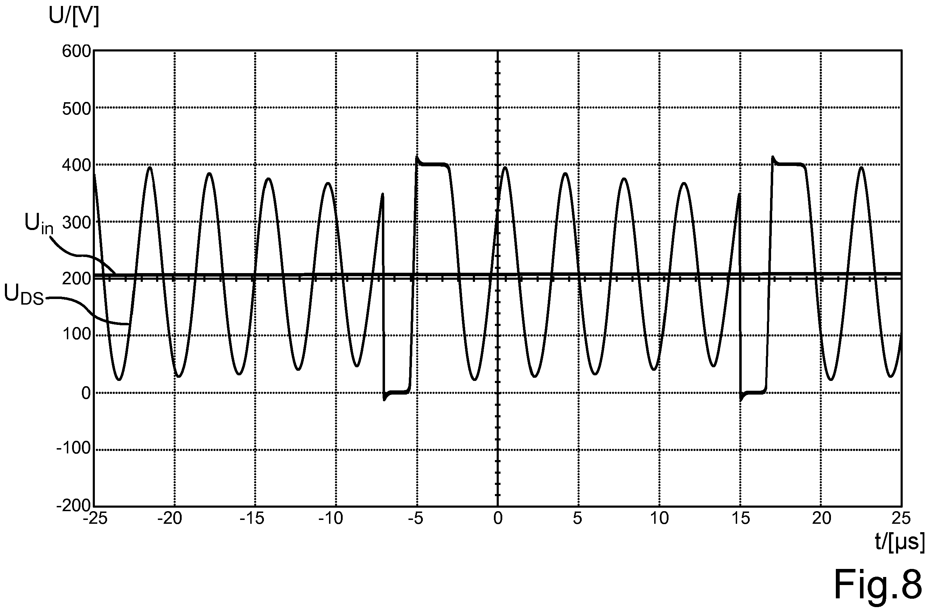

Fig. 8 zeigt denselben Spannungsverlauf bei einer Eingangsspannung Uᵢₙ, welche größer ist als die Hälfte der Ausgangsspannung Uₒᵤₜ, aber deutlich kleiner als die Ausgangsspannung Uₒᵤₜ selbst. Im vorliegenden Beispiel beträgt die Eingangsspannung Uᵢₙ 207 V, die Ausgangsspannung Uₒᵤₜ beträgt 400 V. Hier schwingt die Spannung über der Drain-Source-Strecke des MOSFET 22 schon wieder zurück, ohne den Wert 0 V zu erreichen. Eine Schaltentlastung ist noch zum Großteil möglich, allerdings muss der Schaltzeitpunkt zum richtigen Zeitpunkt erfolgen, das heißt wenn die Spannung gerade das Minimum annimmt. Dann ist die in den wirksamen Kapazitäten gespeicherte Energie minimal, welche beim anschließenden Einschaltvorgang in dem MOSFET 22 in Verlustwärme umgesetzt wird. Demgegenüber zeigt Fig. 8 einen Einschaltvorgang zu einem besonders ungünstigen Zeitpunkt, bei welchem die Spannung über der Drain-Source-Strecke des MOSFET 22 nahezu wieder die volle Spannung erreicht hat. Da die Energie in einem Kondensator quadratisch mit der anliegenden Spannung zunimmt, wird hier eine besonders große Energiemenge in Verlustenergie umgesetzt.

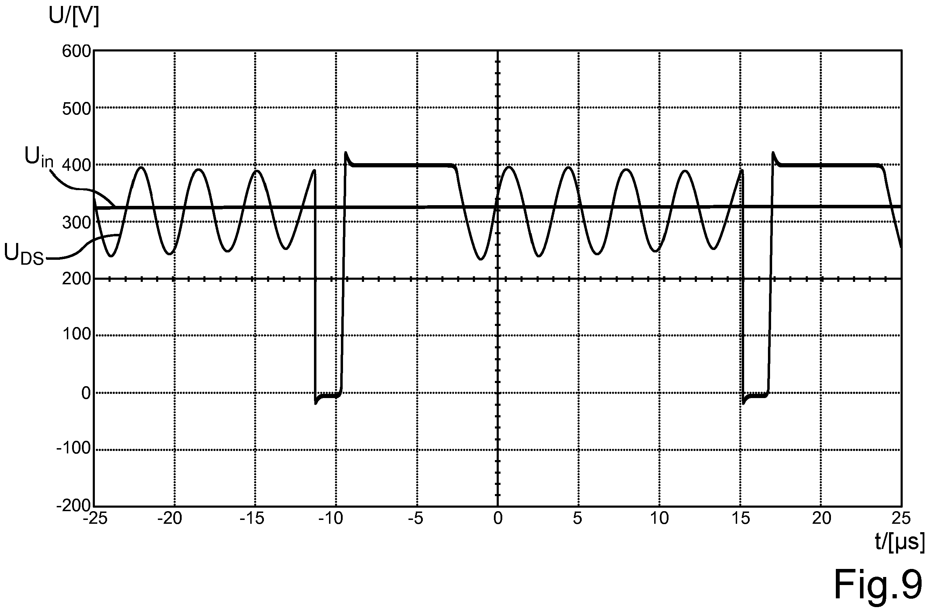

Wenn der Wert der Eingangsspannung Uᵢₙ nahe an dem Wert der Ausgangsspannung Uₒᵤₜ liegt, reicht die Differenz der beiden Spannungen nicht aus, um eine Amplitude zu erzeugen, welche groß genug ist, um entlastetes Schalten zu ermöglichen. Fig. 9 zeigt hier einen beispielhaften Spannungsverlauf über der Drain-Source-Strecke des MOSFET 22 bei einer Eingangsspannung Uᵢₙ gleich 328 V und einer Ausgangsspannung Uₒᵤₜ gleich 400 V. Dieser Betrieb kann beispielsweise auftreten bei einer Speisung mit Wechselspannung im Scheitel der 230 V-Wechselspannung. Durch die begrenzte Umschwingung kann die Spannung über dem MOSFET 22 nur so unwesentlich reduziert werden, dass eine wirksame Schaltentlastung auch zum optimalen Schaltzeitpunkt nicht gegeben ist. Die im AC-Betrieb umgesetzte Verlustenergie in dem MOSFET 22 ist aber nicht so kritisch, da die Schaltfrequenz relativ niedrig ist.

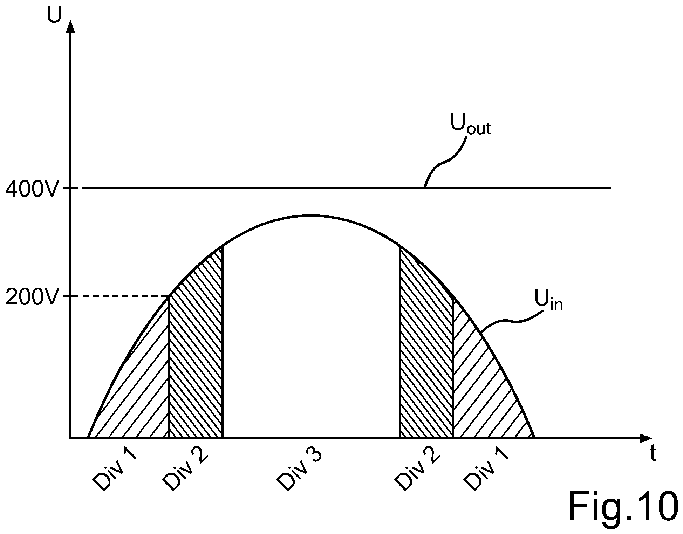

Diese drei voranstehend charakterisierten Betriebsfälle sind in Fig. 10 dargestellt. Das Diagramm zeigt eine schematische Unterteilung einer Sinus-Halbwelle in Bereiche mit unterschiedlichem Schwingungsverhalten des Spannungsverlaufs am elektronischen Schaltelement, welches durch den MOSFET 22 gegeben ist. Auf der Abszisse ist ohne Skalierung die Zeit t aufgetragen, auf der Ordinate ist die Spannung Uᵢₙ in V aufgetragen mit den Markierungen 200 V und 400 V. Der Wert der Zwischenkreisspannung welcher gleich der Ausgangsspannung Uₒᵤₜ gleich 400 V ist, ist gestrichelt dargestellt. Die Sinushalbwelle ist als Teil einer 230 V-Wechselspannung dargestellt. Der erste Bereich Div1 ist dadurch gekennzeichnet, dass die Spannung Uᵢₙ kleiner als 200 V ist. Der erste Bereich Div1 ist unmittelbar vor beziehungsweise nach einem Nulldurchgang der Netzspannung angeordnet, aus welcher sich durch Gleichrichtung die Eingangsspannung Uᵢₙ ergibt. Direkt an die beiden ersten Bereiche Div1 schließt sich jeweils ein zweiter Bereich Div2 an, in dem die Eingangsspannung Uᵢₙ größer als 200 V, das heißt die Hälfte der Ausgangsspannung Uₒᵤₜ gleich 400 V beträgt, wobei sich der jeweils zweite Bereich Div2 bis zu einer Eingangsspannung Uᵢₙ in Höhe von circa 300 V erstreckt. Diese Grenze ist hier willkürlich gewählt und dient lediglich der besseren Darstellung der Einteilung. Zwischen den beiden zweiten Bereichen Div2 ist ein dritter Bereich Div3 angeordnet, der sich über den Scheitel der Netzspannung beziehungsweise das Maximum der gleichgerichteten Eingangsspannung Uᵢₙ hinweg jeweils von dem einen zu dem anderen zweiten Bereich Div2 erstreckt. Im Verlauf einer Sinus-Halbwelle tritt somit der Betriebsfall gemäß dem zweiten Bereich Div2 nur für eine kurze Zeit auf. Nimmt man hingegen eine DC-Spannung von konstant 230 V an, wird ersichtlich, warum bei DC die meisten Verluste entstehen. Der Hochsetzsteller läuft hier kontinuierlich in dem zweiten Bereich Div2, bei welchem die höchsten Verluste entstehen.

Zur Optimierung der Verlustleistung ist es wünschenswert, den MOSFET 22 wieder einzuschalten, wenn die Spannung über der Drain-Source-Strecke ein Minimum hat, denn die in der wirksamen Kapazität gespeicherte Energie steigt quadratisch mit der anliegenden Spannung. Diese wird in dem darauffolgenden Einschaltvorgang des MOSFET 22 komplett in dem MOSFET 22 in Verlustwärme umgesetzt und verschlechtert den Wirkungsgrad des elektrischen Energiewandlers 10 deutlich, insbesondere bei kleinen und kleinsten zu übertragenden Leistungen.

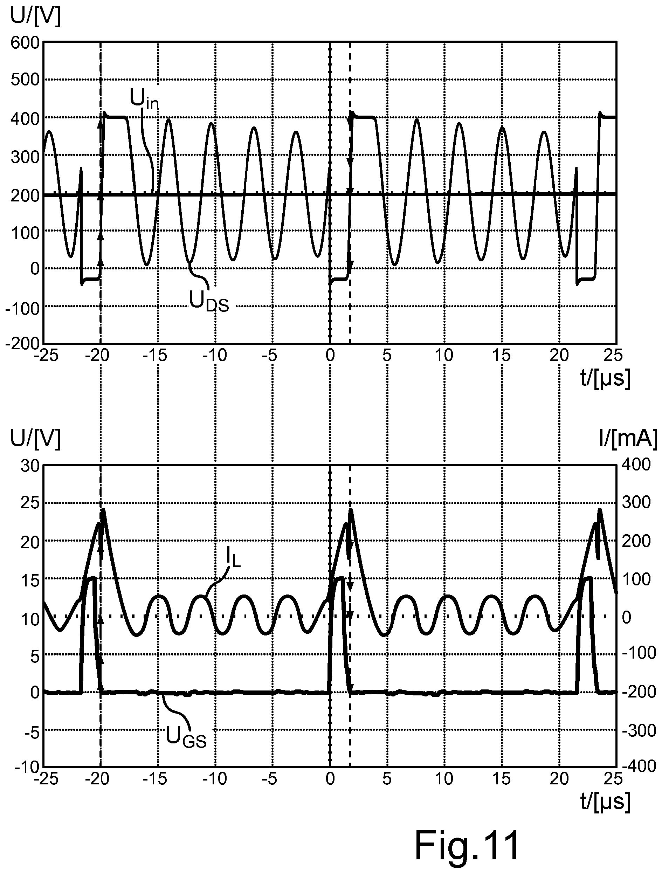

Aber auch wenn die Verlustleistung nicht zu berücksichtigen ist, sollte kein beliebiger Einschaltzeitpunkt gewählt werden, da der Strom I_{L} in der Induktivität 20 zum Einschaltzeitpunkt eine wichtige Rolle spielt. Der Strom I_{L} durch die Induktivität 22 ist gegenüber der Drain-Source-Spannung U_{DS}, welche über der Drain-Source-Strecke des MOSFET 22 anliegt, um 90° in der Phase verschoben. Fig. 11 zeigt den Verlauf des Stroms I_{L} in der Induktivität 20, den Verlauf der Drain-Source-Spannung U_{DS}, sowie die Eingangsspannung Uᵢₙ und eine Gate-Source-Spannung U_{GS}, welche zur Ansteuerung des MOSFET 22 benutzt wird. Das Einschalten des MOSFET 22 erfolgt hier in dem Punkt, in welchem die Linie der Drain-Source-Spannung U_{DS} gerade die Linie der Eingangsspannung Uᵢₙ schneidet, welche gleichzeitig den Mittelwert der freischwingenden Drain-Source-Spannung U_{DS} darstellt und somit als Bezugslinie für einen "Nulldurchgang" betrachtet werden kann. Der Strom I_{L} in der Induktivität 20 ist zu diesem Zeitpunkt der freien Schwingung gerade maximal, der in dem anschließenden Einschaltintervall auftretende Spitzenwert von I_{L} ist entsprechend hoch.

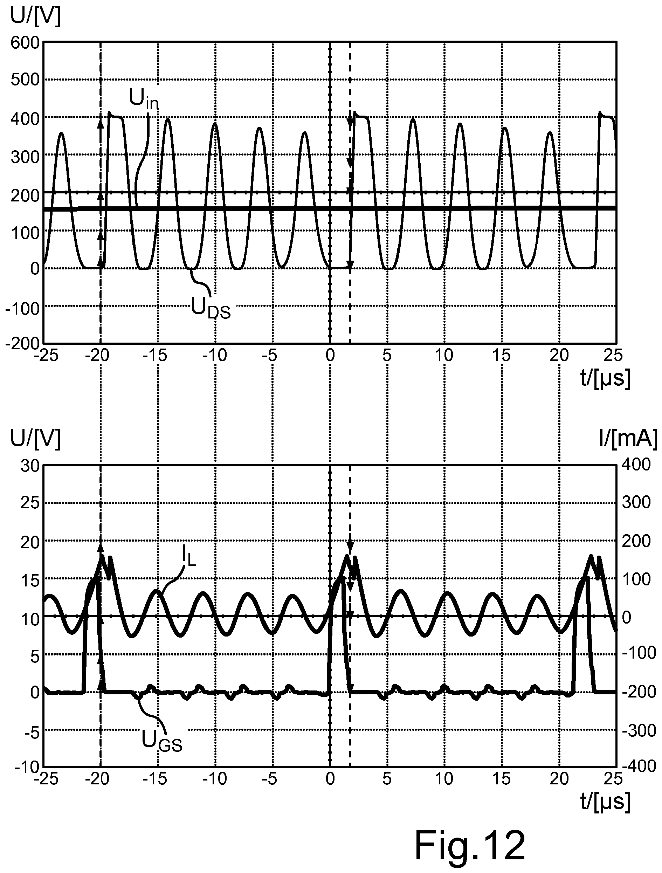

Fig. 12 zeigt dieselben Messkurven wie Fig. 11, allerdings erfolgt hier das Einschalten des MOSFET 22 zu einem anderen Zeitpunkt, nämlich im Spannungsminimum der Drain-Source-Spannung U_{DS} des MOSFET 22. In diesem Fall ist der Strom in der Induktivität 20 nahe 0 A. Es handelt sich hierbei um einen optimalen Schaltvorgang. Wird also in einem Minimum oder Maximum der Drain-Source-Spannung U_{DS} des MOSFET 22 geschaltet, beträgt der Reststrom in der Induktivität 20 0 A.

Dabei ist die absolute Höhe des Stromes I_{L} während der freischwingenden Phase relativ gering. Allerdings wirkt dieser Strom als Offset für den eigentlichen Strom durch die Induktivität 20. Dies gilt genau dann, wenn der Energiewandler mit konstanter Einschaltzeit tₒₙ betrieben wird. Dies ist bei mikrocontrollergesteuerten Wandlern üblich, vor allem, wenn sie zur Leistungsfaktorkorrektur (Power Factor Correction, PFC) genutzt werden. Der technische Aufwand ist geringer, da keine Komparator-Vergleichsschwelle für die Überprüfung der PFC-Bedingung nachgeführt werden muss. Der Offset des Stroms durch die Induktivität 20 hat in dieser Konfiguration eine starke Auswirkung auf den mittleren Strom durch die Induktivität 20 und damit auch auf die übertragene Leistung des Wandlers. Der Offset ist ein echter Offset, das heißt es findet eine lineare Überlagerung zu dem eigentlichen Strom durch die Induktivität 20 statt. Dadurch verändert sich auch der Spitzenstrom in der Induktivität 20. Im Betrieb an der Lück-Grenze oder im lückenden Betrieb verlängert der höhere Spitzenstrom auch die Dauer der Freilaufphasen und damit die Stromzeitfläche.

Gerade im unteren Leistungsbereich der zu übertragenden Leistung des Energiewandlers kann der Offset im Strom I_{L} der Induktivität 20 die Leistung so weit verändern, dass ein übergeordneter Regler reagieren muss. Dabei kann nicht ausgeschlossen werden, dass in manchen Bereichen die Übertragungsfunktion des Energiewandlers nicht mehr monoton ist. In diesem Fall kann der Regler zwischen zwei Arbeitspunkten schwingen.

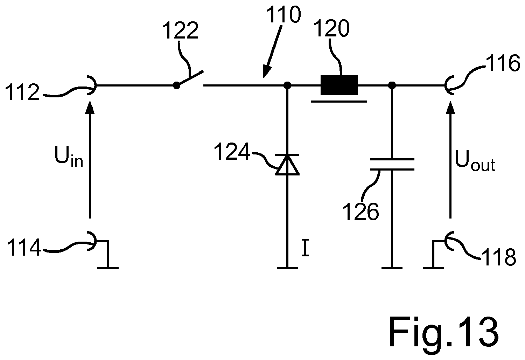

Fig. 13 zeigt einen getakteten elektronischen Energiewandler 110 als Tiefsetzsteller mit einem Eingangsanschluss, der Anschlussklemmen 112, 114 aufweist, zwischen denen eine Eingangsspannung Uᵢₙ einer nicht dargestellten Energiequelle anliegt. Darüber hinaus weist der Energiewandler 20 einen Ausgangsanschluss mit Anschlussklemmen 116, 118 auf, zwischen denen eine Ausgangsspannung Uₒᵤₜ für eine nicht dargestellte elektrische Energiesenke anliegt. Die Anschlussklemme 114 und die Anschlussklemme 118 sind elektrisch leitend miteinander verbunden und bilden vorliegend ein elektrisches Bezugspotential. Die Eingangsspannung Uᵢₙ und die Ausgangsspannung Uₒᵤₜ sind somit nicht galvanisch getrennt. Bei alternativen Schaltungstopologien kann eine galvanische Trennung zwischen den Anschlussklemmen 112 und 114 sowie den Anschlussklemmen 116 und 118 vorgesehen sein. Für das Prinzip der Erfindung ist dies jedoch nicht wesentlich.

Die Anschlussklemme 112 ist an einem ersten Anschluss eines elektronischen Schaltelements, hier an dem Drain-Anschluss eines MOSFET 122, angeschlossen. Ein zweiter Anschluss des elektronischen Schaltelements, hier der Source-Anschluss des MOSFET 122, ist an einem ersten Anschluss einer Induktivität 120 sowie an die Kathode einer Diode 124 angeschlossen. Der Anodenanschluss der Diode 124 ist mit den Anschlussklemmen 114 und 118 elektrisch leitend verbunden.

Der zweite Anschluss der Induktivität 120 ist an einem ersten Anschluss eines Kondensators 126 angeschlossen, der seinerseits an die Anschlussklemme 116 angeschlossen ist. Mit seinem zweiten Anschluss ist der Kondensator 126 an die Anschlussklemmen 114 und 118 angeschlossen. Die Ausgangsspannung an den Anschlussklemmen 116, 118 entspricht also der Spannung an dem Kondensator 126.

Zwischen einem elektrischen Energiewandler 110 in der Ausführung als Tiefsetzsteller gemäß der Anordnung in Fig. 13 und einem elektrischen Energiewandler 10 in der Ausführungsform als Hochsetzsteller gemäß Fig. 1 gibt es einen signifikanten Unterschied im lückenden Betrieb. Die sich ausbildende Schwingung ist beim Hochsetzsteller nur sehr schwach gedämpft. Beim Tiefsetzsteller hingegen ist die Schwingung stark gedämpft, weil die Schwingung auf Seiten der Last stattfindet und durch diese gedämpft wird.

Für den Hochsetzsteller bedeuten die oben genannten Erkenntnisse, dass ein optimaler Zustand nur dann erreicht wird, wenn die zusätzliche Ergänzungsausschaltzeit t_{off_add} in Stufen so angehoben wird, dass die Schaltzeitpunkte immer in den Spannungsminima liegen. Im nachfolgenden Beispiel sind dies circa 3,5 µs. Dabei ist aber darauf zu achten, dass die Übertragungsfunktion nur möglichst kleine Stufen aufweist und sich monoton verhält. Um dies zu erreichen, wird daher vorgeschlagen, beim Verlängern der zusätzlichen Ergänzungsausschaltzeit t_{off_add} gleichzeitig die Einschaltzeit tₒₙ zu vergrößern, um den Sprung in der Übertragungsfunktion minimal zu halten. Dies spielt vor allem bei dem ersten Einfügen einer zusätzlichen Ergänzungsausschaltzeit t_{off_add} eine Rolle, da hier der Leistungssprung sonst sehr groß ist.

Fig. 14 zeigt ein elektronisches Schaltbild eines Energiewandlers wie dem Energiewandler 10 der Fig. 1, wobei in Fig. 14 ergänzend eine Steuereinheit 30 dargestellt ist, die die Schaltung der Fig. 1 komplettiert. Bezüglich der bereits zur Fig. 1 beschriebenen Bauteile wird auf den entsprechenden vorhergehenden Beschreibungsteil verwiesen.

Die Steuereinheit 30 verfügt über einen Eingangsanschluss 32, der mit der Anschlussklemme 16 elektrisch gekoppelt ist. Die Steuereinheit 30 verfügt somit über eine Information der durch den Energiewandler 10 bereitgestellten Ausgangsspannung Uₒᵤₜ zwischen den Anschlussklemmen 16, 18, zumal sie - wie aus Fig. 14 nicht ersichtlich - ebenfalls an das zuvor bereits erwähnte Bezugspotential der Anschlussklemmen 14, 18 angeschlossen ist. In Fig. 14 ebensowenig dargestellt ist ein Vergleich der Information über die Ausgangsspannung Uₒᵤₜ mit einem ihr zugeordneten Sollwert, und auch nicht, dass das Ergebnis dieses Vergleichs zur weiteren Verarbeitung herangezogen wird.

Die Steuereinheit 30 stellt die Abweichung der Ausgangsspannung Uₒᵤₜ von ihrem Sollwert sowohl an einer Integrationseinheit 34 als auch an einer Proportionaleinheit 36 bereit. Diese verarbeiten das an dem Eingangsanschluss 32 bereitgestellte Signal und erzeugen daraus Ausgangssignale, die über eine Verknüpfungseinheit 38 zu einem ersten Signal 40 kombiniert werden. Dieses erste Signal 40 ist ein Signal, welches zumindest in einem bestimmten Leistungsbereich proportional zur Einschaltzeit des MOSFET 22 ist.

Das erste Signal 40 wird einem ersten Zeitgeber 42 und einem zweiten Zeitgeber 44 zugeführt. Der erste Zeitgeber erzeugt ein zweites Signal 46 für einen daran angeschlossenen Taktgeber 50, der vorliegend als PWM-Einheit ausgebildet ist.

Weiterhin ist aus der der US 2012/0286686 A1 bekannt, dass die Einschaltzeit tₒₙ eine minimale Einschaltzeit t_{on_min} nicht unterschreiten kann. Sobald das erste Signal 40 den Wert für die minimale Einschaltzeit t_{on_min} erreicht, wird die übliche Proportionalität verlassen und stattdessen ein konstanter Wert für die Einschaltzeit tₒₙ als zweites Signal 46 an den Taktgeber 50 übermittelt. Die Proportionalität ist demnach nur innerhalb des ersten Leistungsbereichs gegeben. Innerhalb des zweiten Leistungsbereichs ist die minimale Einschaltzeit t_{on_min} gegeben, die in diesem Bereich konstant ist. Der Taktgeber 50 erzeugt aus dem von dem ersten Zeitgeber 42 bereitgestellten zweiten Signal ein Steuersignal X, welches über einen Treiberbaustein 52 auf einem Gate-Anschluss des MOSFETs 22 gegeben wird. Das zweite Signal 46 steuert also den Zeitraum des Einschaltens des MOSFETs 22.

Die Steuereinheit 30 weist ferner einen zweiten Zeitgeber auf, welcher aus dem ersten Signal 40 ein drittes Signal 48 erzeugt, welches eine Ergänzungsausschaltzeit t_{off_add} repräsentiert. Dieses Signal 48 wird ebenfalls wie das Signal 46 dem Taktgeber 50 zugeführt. In Fig. 14 ist mit der Integrationseinheit 34, der Proportionaleinheit 36 sowie der Verknüpfungseinheit 38 ein PI-Regler realisiert, wie er für getaktete elektronische Energiewandler im PFC-Betrieb in der Regel zum Einsatz kommt. Der Regler berechnet üblicherweise immer die Einschaltzeit. Zusammenfassend werden der Eingangsanschluss 32 der Steuereinheit 30 sowie die Integrationseinheit 34, die Proportionaleinheit 36 und die Verknüpfungseinheit 38 als Einstelleinheit 31 bezeichnet. Dabei kann die Einstelleinheit 31 Teil der Steuereinheit 30 sein oder als von dieser getrennte Einheit vorliegen, wobei in letzterem Fall der Ausgang der Verknüpfungseinheit 38 mit einem Eingangsanschluss der Steuereinheit 30 zur Bereitstellung des ersten Signals 40 verbunden ist.

Im Unterschied zu der Lehre der US 2012/0286686 A1 ist bei dem ersten Zeitgeber 42 vorgesehen, dass die Proportionalität dadurch begrenzt ist, dass eine minimale Einschaltzeit t_{on_min} nicht unterschritten werden kann, und zwar derart, dass beim Unterschreiten der minimalen Einschaltzeit t_{on_min} durch die Einschaltzeit tₒₙ der zweite Zeitgeber 44 an seinem Ausgang ein Signal 48 bereitstellt, welches eine vorgebbare, konstante Ergänzungsausschaltzeit t_{off_add} repräsentiert. Gleichzeitig wird durch den ersten Zeitgeber 42 am Ausgang ein Signal 46 bereitgestellt, welches eine sprungförmige Erhöhung der Einschaltzeit tₒₙ nach einem Wechsel in den zweiten Leistungsbereich aufweist.

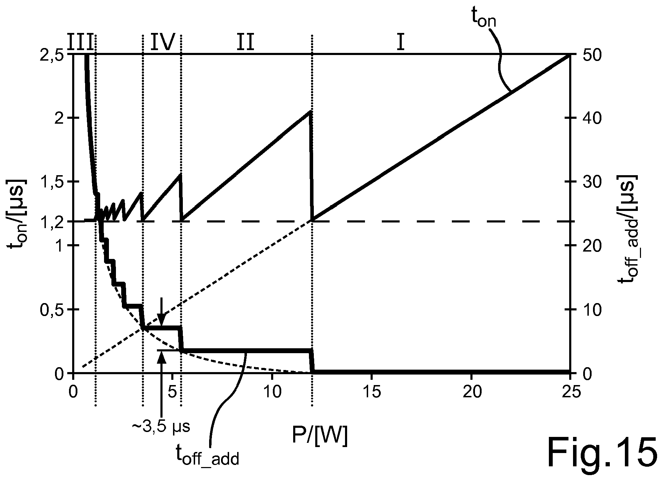

Das genaue Verfahren wird nachfolgend anhand der Darstellung in Fig. 15 erläutert. Der Aufbau des Diagramms entspricht demjenigen wie in Fig. 3, wobei das Verhalten in einemersten Leistungsbereich I, dessen untere Grenze bei circa 12 W liegt, identisch ist zu demjenigen in Fig. 3. Im Unterschied zu der Lehre der US 2012/0286686 A1 erfolgt danach aber in einem zweiten Leistungsbereich II nicht ein Begrenzen der Einschaltzeit tₒₙ auf die minimale Einschaltzeit t_{on_min}. Im Gegensatz zu einem kontinuierlichen Erhöhen der Ergänzungsausschaltzeit t_{off_add} ausgehend von 0 µs mit abnehmender, zu übertragender Leistung des Energiewandlers ausgehend von der Schwelle bei circa 12 W ist vorgesehen, bei Erreichen der minimalen Einschaltzeit t_{on_min} durch die Einschaltzeit tₒₙ gleichzeitig einen Sprung sowohl in der Einschaltzeit tₒₙ als auch in der Ergänzungsausschaltzeit t_{off_add} auszuführen. Der Verlauf der Einschaltzeit tₒₙ und der Ergänzungsausschaltzeit t_{off_add} als Funktion der zu übertragenden Leistung P des Energiewandlers wurde dabei wie folgt bestimmt:
- Um geringere Leistung P zu erhalten, wird zunächst die Einschaltzeit tₒₙ erniedrigt;
- dies geschieht bis zu einer minimalen Einschaltzeit t_{on_min}.
- Wird die minimale Einschaltzeit t_{on_min} unterschritten, wird die zusätzliche Ergänzungsausschaltzeit t_{off_add} um eine Periode erhöht.
- Gleichzeitig wird aber die Einschaltzeit tₒₙ wieder so weit erhöht, dass die übertragene Leistung keine Unstetigkeit aufweist.
- Man beachte die unterschiedliche Skalierung der Ordinate der Einschaltzeit tₒₙ und der zusätzlichen Ergänzungsausschaltzeit t_{off_add}.

Fig. 15 zeigt einige erwähnenswerte Eigenschaften des Verlaufs der beiden Funktionen der Einschaltzeit tₒₙ und der Ergänzungsausschaltzeit t_{off_add} in Abhängigkeit der zu übertragenden Leistung P. Bei gleichbleibender Sprunghöhe der Ergänzungsausschaltzeit t_{off_add} wird die Sprunghöhe der Einschaltzeit tₒₙ sukzessive kleiner. Die dabei entstehenden lokalen Maxima der Einschaltzeit tₒₙ legen die Vermutung nahe, dass sie näherungsweise durch eine Gerade miteinander verbunden werden können. Diese Gerade schneidet die Ordinate näherungsweise bei dem Wert der minimalen Einschaltzeit t_{on_min} im hier gezeigten Beispiel 1,2 µs. Für den Gleichspannungsfall, das heißt eine konstante Eingangsspanne Uᵢₙ und eine konstante Ausgangsspannung Uₒᵤₜ an dem Wandler lassen sich die Kurvenstücke rechnerisch ermitteln. Tatsächlich handelt es sich bei den sägezahnförmigen Abschnitten nicht um Geradenabschnitte, sondern um vom jeweiligen Parameter der Ergänzungsausschaltzeit t_{off_add} abhängige Lösungen einer quadratischen Gleichung. Für eine Implementierung des Verfahrens beispielsweise in einem mikrocontrollergesteuerten Energiewandler ist jedoch eine lineare Approximation völlig ausreichend. Hierbei sind ohnehin durch parasitäre Einflüsse einer realen Schaltung Abweichungen von den hier unter der Annahme einer verlustlosen Energieübertragung vorgestellten Abhängigkeiten zu erwarten. Unmittelbar vor den Sprüngen in einem jeweils kleineren Leistungsbereich sind die Wertepaare für die Einschaltzeit tₒₙ und die Ergänzungsausschaltzeit t_{off_add} gemäß Fig. 15 identisch zu den Wertepaaren, wie sie in der Fig. 3 dargestellt sind.

Ab einer gewissen Grenze, das heißt einer großen Ergänzungsausschaltzeit t_{off_add}, reicht es aus, nur noch t_{off_add} um jeweils mehrere Perioden des Wertes t_{off_step} zu erhöhen. Das Verfahren eignet sich für die Implementierung im digitalen System, die Auflösung bleibt im unteren Bereich der Leistung P zunächst erhalten, da immer wieder die Einschaltzeit um einen Tick, das heißt einen kleinsten Prozessortakt, erniedrigt wird. Da dieser aber größer eines bestimmten Wertes gehalten wird, bleibt eine Mindestauflösung erhalten. Ab einer gewissen Ergänzungsausschaltzeit t_{off_add} kann dann auch wieder auf das kontinuierliche Verfahren gewechselt werden, da die Frequenz relativ niedrig ist. In Fig. 15 ist dieser Bereich als dritter Leistungsbereich III mit einer konstanten Einschaltzeit tₒₙ, welche hier 1,2 µs beträgt, eingezeichnet. Ein sich direkt unterhalb des zweiten Leistungsbereichs II anschließender Leistungsbereich mit einem konstanten, gegenüber dem in dem zweiten Leistungsbereich II vorliegenden Wert der Ergänzungsausschaltzeit t_{off_add} erhöhten Wert der Ergänzungsausschaltzeit t_{off_add} ist als vierter Leistungsbereich IV bezeichnet. Weitere nicht näher bezeichnete Leistungsbereiche sind in Fig. 15 zwischen dem vierten Leistungsbereich IV und dem dritten Leistungsbereich III durch entsprechende synchrone, sprungförmige Erhöhung der Einschaltzeit tₒₙ und der Ergänzungsausschaltzeit t_{off_add} angedeutet. Eine Hysterese beim Umschalten kann Abhilfe schaffen, wenn sich in der Nähe der Sprungstellen kein stabiler Betrieb innerhalb eines Leistungsbereichs einstellt, also ein sogenanntes "Schnattern" auftritt.

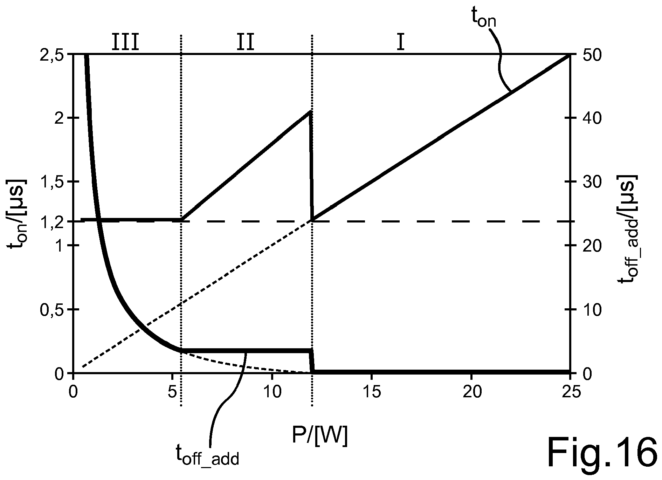

In einem zweiten Ausführungsbeispiel kann ein Tiefsetzsteller zum Betrieb von LED verwendet werden. Dabei sind die Monotonie und die Stetigkeit der Übertragungsfunktion besonders wichtig. Deshalb wird vorgeschlagen, nur einen Sprung, diesen aber mit einer Hysterese vorzusehen. Dies erscheint möglich, weil die Schwingung stark gedämpft ist. Deshalb sollte eine Rückkehr zum kontinuierlichen Verlauf der Ergänzungsausschaltzeit t_{off_add} schon bei einer relativ geringen zusätzlichen Ergänzungsausschaltzeit t_{off_add} möglich sein. Eine mögliche Ausführungsform ist in Fig. 16 anhand des Verlaufs der Einschaltzeit tₒₙ und der Ergänzungsausschaltzeit t_{off_add} als Funktion der zu übertragenden Leistung des Energiewandlers P dargestellt. Hierbei erstreckt sich der erste Leistungsbereich I, wie bereits in den Fig. 3 und 15 dargestellt, oberhalb einer Leistung von 12 W. Direkt unterhalb daran schließt sich, wie bereits in Fig. 15 auch dargestellt, ein zweiter Leistungsbereich II mit einer unteren Grenze von circa 5,5 W an. In diesem zweiten Leistungsbereich ist eine Ergänzungsausschaltzeit t_{off_add} wirksam, welche ungleich Null ist. Diese Ergänzungsausschaltzeit t_{off_add} ist vorzugsweise gleich der Hälfte der Periodendauer der zuvor dokumentierten Schwingung über dem MOSFET. Die Einschaltzeit tₒₙ ist in dem zweiten Leistungsbereich II entsprechend den vorherigen Ausführungen korrigiert, sodass wieder eine gleiche Leistungsübertragung des Energiewandlers gegeben ist, wie wenn die Steuerung analog in Fortsetzung des ersten Leistungsbereichs I erfolgt wäre. Im Gegensatz zu der Ausführungsform gemäß Fig. 15 schließt sich direkt an den zweiten Leistungsbereich II der dritte Leistungsbereich III an, das heißt unterhalb der Grenze von circa 5,5 W, wobei die zu übertragende Leistung des Energiewandlers kleiner ist als in dem zweiten Leistungsbereich II und die übertragene Leistung des Energiewandlers mittels einer konstanten Einschaltzeit tₒₙ, welche vorzugsweise den Wert der minimalen Einschaltzeit t_{on_min} annimmt, und mittels einer mit abnehmender Leistung zunehmenden Ergänzungsausschaltzeit t_{off_add} eingestellt wird, wobei in diesem Leistungsbereich die Ergänzungsausschaltzeit kontinuierlich eingestellt wird. Diese Ausführungsform wird insbesondere für die Anwendung bei einem Tiefsetzsteller vorgeschlagen, bei welchem die sich ausbildende Schwingung über dem elektronischen Schaltelement in Form des MOSFET 122 stark gedämpft durch die Last ist, welche beispielsweise durch eine LED gebildet sein kann.

In einer weiteren Ausführungsform kann zwischen dem zweiten Leistungsbereich II und dem dritten Leistungsbereich III gemäß Fig. 16 ein vierter Leistungsbereich IV eingefügt sein, welcher sich dann zwischen der zu übertragenden Leistung des Energiewandlers P zwischen circa 3,5 W und 5,5 W erstreckt. Dieser ist in der Art gestaltet wie der zweite Leistungsbereich II und entspricht dem vierten Leistungsbereich IV in der Fig. 15. Im Unterschied zu der Ausführungsform gemäß Fig. 15 schließen sich dann unterhalb dieses vierten Leistungsbereichs IV keine weiteren Leistungsbereiche an, in denen die Ergänzungsausschaltzeit sprungförmig erhöht wird, sondern es schließt sich dann direkt unterhalb der 3,5 W-Grenze der dritte Leistungsbereich III an.

Für den Betrieb eines Hochsetzstellers, welcher gleichzeitig auch die Funktionalität eines Power-Factor-Controllers erfüllt, wird ein Verfahren mit einem ersten Leistungsbereich I vorgeschlagen, in welchem die durch den Energiewandler zu übertragende Leistung durch Veränderung der Einschaltzeit tₒₙ gesteuert wird und die Ergänzungsausschaltzeit konstant Null ist sowie einem zweiten Leistungsbereich, in welchem eine konstante Ergänzungsausschaltzeit t_{off_add} vorliegt und nach einem sprungförmigen Erhöhen der Einschaltzeit tₒₙ im Übergang zwischen den beiden Leistungsbereichen die Einschaltzeit tₒₙ weiter kontinuierlich erniedrigt wird bis zu der Grenze, bei welcher wiederum die minimale Einschaltzeit t_{on_min} erreicht wird. Weiterhin wird in einem dritten Leistungsbereich III, welcher unterhalb einer vorgebbaren Grenze angeordnet ist, ein Steuerprinzip mit einer kontinuierlichen Erhöhung der Ergänzungsausschaltzeit t_{off_add} bei abnehmender, zu übertragender Leistung des Energiewandlers P und einer konstanten Einschaltzeit tₒₙ vorgeschlagen.

Dabei kann vorgesehen sein, dass sich der dritte Leistungsbereich III nahtlos direkt an den zweiten Leistungsbereich II anschließt.

Alternative Ausführungsformen weisen mindestens einen weiteren Leistungsbereich auf, in welchem die Steuerung der durch den Energiewandler zu übertragenden Leistung analog zu dem zweiten Leistungsbereich II erfolgt. Diese weiteren Leistungsbereiche schließen sich nahtlos aneinander an, um die Lücke zwischen dem dritten Leistungsbereich III und dem zweiten Leistungsbereich II vollständig zu schließen. Der größte Leistungsbereich dieser der Anzahl nach frei wählbaren Leistungsbereiche kann somit als der aus dem vorherigen Ausführungsbeispiel bekannte vierte Leistungsbereich IV bezeichnet werden.

Bevorzugt wird beim Übergang von dem zweiten Leistungsbereich II in den vierten Leistungsbereich IV die Ergänzungsausschaltzeit t_{off_add} um eine Schrittweite erhöht. Der vorgegebene Wert t_{off_step} dieser Schrittsweite ist bevorzugt gleich der Periodendauer der zuvor herangezogenen elektrischen Schwingung über dem elektronischen Schaltelement. Alternativ oder zusätzlich kann insbesondere zu kleineren Leistungen hin die Schrittweite auf ein Mehrfaches dieses Wertes t_{off_step} erhöht werden. Dadurch kann vorteilhafterweise die Anzahl der notwendigen Sprünge und damit möglicherweise Instabilitäten beim Betrieb eines Energiewandlers nach dem beschriebenen Verfahren vermieden beziehungsweise reduziert werden. Die Erhöhung der Ergänzungsausschaltzeit t_{off_add} ist nicht auf eine bestimmte Rasterung festgelegt. Insbesondere das erste Inkrement ausgehend von der Ergänzungsausschaltzeit t_{off_add} = 0 µs bei Verlassen des ersten Leistungsbereichs I kann von den nachfolgenden Inkrementen erheblich abweichen. Auch können die nachfolgenden Inkremente ihrerseits bedingt durch notwendige Anpassungen an die verwendete Hardware, welche als elektronisches Vorschaltgerät (EVG) insbesondere einen Mikrocontroller sowie neben anderen leistungselektronische Komponenten auch Filterelemente mit bestimmten Frequenzanforderungen aufweisen kann, individuell angepasst sein.

Bereiche mit einer stufigen Erhöhung der Ergänzungsausschaltzeit t_{off_add} jeweils beim Übergang von einem höheren Leistungsbereich in einen niedrigeren Leistungsbereich, beispielsweise von dem ersten Leistungsbereich I in den zweiten Leistungsbereich II oder von dem zweiten Leistungsbereich I in den vierten Leistungsbereich IV, und Bereiche mit eine Begrenzung der Einschaltzeit tₒₙ bei einem Übergang von einem höheren Leistungsbereich in einen niedrigeren Leistungsbereich auf den Wert einer minimalen Einschaltzeit t_{on_min}, beispielsweise von dem vierten Leistungsbereich IV in den dritten Leistungsbereich III, wobei dann in dem niedrigeren Leistungsbereich die Einschaltzeit tₒₙ konstant gehalten wird und die Ergänzungsausschaltzeit t_{off_add} kontinuierlich gesteuert wird, können beliebig miteinander kombiniert werden.

Bei Speisung des Energiewandlers mit einer Wechselspannung, insbesondere einer sinusförmigen Wechselspannung, kann die jeweils leistungsabhängig veränderliche Größe der Einschaltzeit tₒₙ oder der Ergänzungsausschaltzeit t_{off_add} innerhalb einer halben oder ganzen Periode der verwendeten Wechselspannung konstant eingestellt werden, wobei der jeweilige Wert dann so ermittelt wird, dass sich das gleiche Übertragungsverhalten des Energiewandlers wie bei Speisung mit einer Gleichspannung ergibt, deren Wert gleich dem Effektivwert der anliegenden Wechselspannung ist.

Eine beispielhafte Realisierung eines Verfahrens gemäß der Ansteuerung, wie sie in Fig. 15 dargestellt ist, kann derart erfolgen, dass die einzelnen Leistungsbereiche über einen Zustandsautomaten verwaltet werden. Dabei kann von einem Wechsel von dem ersten Leistungsbereich I in den zweiten Leistungsbereich II die Ergänzungsausschaltzeit t_{off_add} um den entsprechenden Wert erhöht werden, gleichzeitig ist in dem Zustandsautomaten der entsprechende Wert für die Einschaltzeit tₒₙ hinterlegt, bei der wieder ein Rücksprung in den ersten Leistungsbereich I erfolgen soll. Dieses Vorgehen lässt sich sukzessive auf jeden weiteren sprungförmigen Übergang auch mit abweichender Schrittweite anwenden. Der Wert der Einschaltzeit tₒₙ, bei welchem wieder ein Rücksprung von einem niedrigeren Leistungsbereich in den nächst höheren Leistungsbereich erfolgen soll, kann derart angepasst sein, dass eine Hysterese entsteht, in deren Folge nach dem Rücksprung in den nächst höheren Leistungsbereich für die Einschaltzeit tₒₙ nicht die minimale Einschaltzeit t_{on_min} eingestellt wird, sondern ein entsprechend höherer Wert. Auf diese Weise lassen sich Instabilitäten infolge eines permanenten Bereichswechsels vermeiden, welcher beispielsweise durch eine endliche Auflösung des digitalen Systems gegeben sein kann.

Die Ausführungsbeispiele dienen lediglich der Erläuterung der Erfindung und sind für diese nicht beschränkend.

Die für das erfindungsgemäße Verfahren beschriebenen Vorteile und Merkmale sowie Ausführungsformen gelten gleichermaßen für den erfindungsgemäßen Energiewandler und umgekehrt. Folglich können für Verfahrensmerkmale entsprechende Vorrichtungsmerkmale und umgekehrt vorgesehen sein.

Somit wurde abschließend gezeigt, wie durch die geschickte Wahl der Schaltzeitpunkte Wandlerschaltungen, insbesondere Boost- und Buck-Topologien, im Bereich des Übergangs vom Transition-Modus zum Discontinuous-Modus optimiert werden können. Die mit dem entsprechenden Verfahren betriebenen Schaltungstopologien können daher auch in kritischen LED-Anwendungen in einem breiten Leistungsbereich eingesetzt werden.

## Patentansprüche

1. Getakteter elektronischer Energiewandler (10) mit
- einem elektronischen Schaltelement (22),
- wenigstens zwei elektrischen Energiespeichern (20, 26),
- einem ersten Anschluss (12, 14) zum Anschließen an eine elektrische Energiequelle,
- einem zweiten Anschluss (16, 18) zum Anschließen an eine elektrische Energiesenke,
- einem Taktgeber (50) zum Steuern des elektronischen Schaltelements (22) im Schaltbetrieb,
- einem Eingangsanschluss (38) für ein erstes Signal (40) zur Einstellung einer zu übertragenden Leistung des Energiewandlers (10),
- einem an den Taktgeber (50) und den Eingangsanschluss (38) angeschlossenen ersten Zeitgeber (42) zur Bereitstellung eines eine Einschaltzeit (tₒₙ) repräsentierenden zweiten Signals (46), wobei der Taktgeber (50) dazu ausgelegt ist, die zu übertragende Leistung des Energiewandlers (10) in einem ersten Leistungsbereich mittels der Einschaltzeit (tₒₙ) des elektronischen Schaltelements (22) einzustellen, sowie
- einem an den Taktgeber (50) und den Eingangsanschluss (38) angeschlossenen zweiten Zeitgeber (44) zur Bereitstellung eines eine Ergänzungsausschaltzeit (t_{off_add}) repräsentierenden dritten Signals (48) in einem zweiten Leistungsbereich, in dem die zu übertragende Leistung des Energiewandlers (10) kleiner als in dem ersten Leistungsbereich ist, wobei der Taktgeber (50) dazu ausgelegt ist, die zu übertragende Leistung des Energiewandlers (10) in dem zweiten Leistungsbereich mittels einer Kombination des zweiten und des dritten Signals (46, 48) einzustellen,
**dadurch gekennzeichnet, dass**
der Energiewandler eingerichtet ist, beim Übergang vom ersten in den zweiten Leistungsbereich das dritte Signal um einen vorbestimmten Wert zu verändern, um eine größere Ergänzungsausschaltzeit (t_{off_add}) zu realisieren, und gleichzeitig das zweite Signal um einen vorbestimmten Wert zu verändern, um die Einschaltzeit (tₒₙ) zu erhöhen, wobei die übertragene Leistung beim Übergang vom ersten in den zweiten Leistungsbereich gleich bleibt, und wobei das dritte Signal (48) abschnittsweise über einen Leistungsbereich konstant ist.

2. Energiewandler (10) nach Anspruch 1,
**dadurch gekennzeichnet, dass**
der Übergang von dem ersten Leistungsbereich in den zweiten Leistungsbereich bei einer minimalen Einschaltzeit (t_{on_min}) stattfindet.

3. Energiewandler (10) nach Anspruch 1 oder 2,
**dadurch gekennzeichnet, dass**
es weitere Leistungsbereiche gibt, und der Übergang zum nächsten Leistungsbereich jeweils bei Erreichen der minimalen Einschaltzeit (t_{on_min}) stattfindet.

4. Energiewandler (10) nach Anspruch 3,
**dadurch gekennzeichnet, dass**
die Ergänzungsausschaltzeit (t_{off_add}) beim Übergang zum nächsten Leistungsbereich immer um denselben Wert erhöht wird.

5. Energiewandler (10) nach Anspruch 3,
**dadurch gekennzeichnet, dass**
die Einschaltzeit (tₒₙ) beim Übergang zum nächsten Leistungsbereich immer um einen Faktor der minimalen Einschaltzeit (t_{on_min}) erhöht wird.

6. Energiewandler (10) nach einem der vorhergehenden Ansprüche,
**dadurch gekennzeichnet, dass**
der Taktgeber (50) dazu ausgelegt ist, bei Erreichen eines vorgebbaren Energieinhalts eines der wenigstens zwei elektrischen Energiespeicher (20, 26) einen neuen Taktzyklus zu starten, welcher mit einer zusätzlichen Ausschaltphase des elektronischen Schaltelements (22) mit einer Dauer der Ergänzungsausschaltzeit (t_{off_add}) beginnt, wobei sich an die zusätzlichen Ausschaltphase eine Einschaltphase des elektronischen Schaltelement (22) mit einer Dauer der Einschaltzeit (tₒₙ) anschließt.

7. Energiewandler (10) nach einem der vorhergehenden Ansprüche,
**dadurch gekennzeichnet, dass**
der erste Zeitgeber (42) dazu ausgelegt ist, in dem zweiten Leistungsbereich die Ermittlung der Einschaltzeit (tₒₙ) unter Berücksichtigung einer an dem ersten Anschluss (12, 14) anliegenden elektrischen Spannung (Uin) und/oder einer an dem zweiten Anschluss (16, 18) anliegenden elektrischen Spannung (Uₒᵤₜ) auszuführen.

8. Energiewandler (10) nach Anspruch 7, **dadurch gekennzeichnet, dass** der erste Zeitgeber (42) dazu ausgelegt ist, eine Spannungsform der an dem ersten Anschluss (12, 14) anliegenden elektrischen Spannung (Uin) zu ermitteln und die Ermittlung der Einschaltzeit (tₒₙ) in dem zweiten Leistungsbereich in Abhängigkeit der ermittelten Spannungsform auszuführen.

9. Leuchtvorrichtung mit einem Leuchtmittel und einem elektrischen Anschluss zum Anschließen der Leuchtvorrichtung an eine elektrische Energiequelle, **dadurch gekennzeichnet, dass** die Leuchtvorrichtung einen getakteten elektronischen Energiewandler (10) nach einem der vorhergehenden Ansprüche aufweist.

10. Verfahren zum Einstellen einer mittels eines getakteten elektronischen Energiewandlers (10) gemäß einem der Ansprüche 1 bis 8 zu übertragenden elektrischen Leistung, **gekennzeichnet durch** folgende von der zu übertragenen Leistung abhängige Schritte:
- In einem ersten Leistungsbereich Festlegen einer minimalen Einschaltzeit (t_{on_min}) und Zuweisen einer Ergänzungsausschaltzeit (t_{off_add}) zum Wert 0.
- zur Verringerung einer übertragenen Leistung Erniedrigung der Einschaltzeit (tₒₙ) bis zu der minimalen Einschaltzeit (t_{on_min}),
- bei Erreichen der minimalen Einschaltzeit (t_{on_min}) durch die Einschaltzeit (tₒₙ) sprunghaftes Erhöhen der Einschaltzeit (tₒₙ) und gleichzeitiges Erhöhen der Ergänzungsausschaltzeit (t_{off_add}) um einen vorgebbaren Wert (t_{off_step}),
- Festlegen der Ergänzungsausschaltzeit (t_{off_add}) als konstant über den Leistungsbereich bis zum nächsten Erreichen der minimalen Einschaltzeit (t_{on_min}) durch die Einschaltzeit (tₒₙ).

11. Verfahren nach Anspruch 10,
**dadurch gekennzeichnet, dass**
die Einschaltzeit (tₒₙ) beim Übergang zum nächsten Leistungsbereich immer um einen Faktor der minimalen Einschaltzeit (t_{on_min}) erhöht wird.

12. Verfahren nach Anspruch 10 oder 11,
**dadurch gekennzeichnet, dass**
die übertragende Leistung beim Übergang zum nächsten Leistungsbereich gleich bleibt.

13. Verfahren nach Anspruch 10, 11 oder 12,
**dadurch gekennzeichnet, dass**
in einem weiteren Leistungsbereich, in welchem die zu übertragende Leistung des Energiewandlers (10) kleiner ist als in dem vorhergehenden niedrigsten Leistungsbereich, die zu übertragende Leistung des Energiewandlers (10) mittels einer konstanten Einschaltzeit (tₒₙ) und mittels einer mit abnehmender Leistung zunehmenden Ergänzungsausschaltzeit (t_{off_add}) eingestellt wird.

14. Verfahren nach einem der Ansprüche 10 bis 13,
**dadurch gekennzeichnet, dass**
die Einschaltzeit (tₒₙ) in dem zweiten und den weiteren Leistungsbereichen derart in Abhängigkeit eines ersten Signals (40), ermittelt wird, dass die zu übertragende Leistung von dem ersten Signal (40) in gleicher Weise abhängt, wie wenn die zu übertragende Leistung analog zu dem ersten Leistungsbereich gesteuert werden würde, wobei das erste Signal in Abhängigkeit einer zu übertragenden Leistung des Energiewandlers (10) eingestellt wird.

15. Verfahren nach einem der Ansprüche 10 bis 14, **dadurch gekennzeichnet, dass** die Einschaltzeit (tₒₙ) in dem zweiten und den weiteren Leistungsbereichen unter Berücksichtigung einer konstanten Spannungsamplitude und einer konstanten Kurvenform für eine elektrische Spannung (Uᵢₙ) einer am Energiewandler (10) angeschlossenen Energiequelle und einer durch den Energiewandler (10) bereitgestellten elektrischen Spannung (Uₒᵤₜ) für einen an den Energiewandler (10) angeschlossenen Verbraucher so ermittelt wird, dass die Einschaltzeit (tₒₙ) ausschließlich von der zu übertragenden Leistung abhängt.

16. Verfahren nach einem der Ansprüche 10 bis 15, **dadurch gekennzeichnet, dass** der Energiewandler (10) eingangsseitig mit einer Wechselspannung beaufschlagt und derart gesteuert wird, dass ein eingangsseitiger Leistungsfaktor maximiert wird.

17. Verfahren nach Anspruch 16, **dadurch gekennzeichnet, dass** die Einschaltzeit (tₒₙ) und/oder die Ergänzungsausschaltzeit (t_{off_add}) bei einer konstanten abzugebenden Leistung des Energiewandlers (10) innerhalb einer halben oder ganzen Periode der eingangsseitig anliegenden Wechselspannung als konstant festgelegt wird.

## Claims

1. Clocked electronic energy converter (10) having
- an electronic switching element (22),
- at least two electrical energy storage devices (20, 26),
- a first terminal (12, 14) for connecting to an electrical energy source,
- a second terminal (16, 18) for connecting to an electrical energy sink,
- a clock generator (50) for controlling the electronic switching element (22) during switching operation,
- an input terminal (38) for a first signal (40) for adjusting a power to be transmitted by the energy converter (10),
- a first timer (42) connected to the clock generator (50) and to the input terminal (38), for providing a second signal (46) representing a switch-on time (tₒₙ), the clock generator (50) being designed to adjust the power to be transmitted by the energy converter (10) in a first power range by means of the switch-on time (tₒₙ) of the electronic switching element (22), and
- a second timer (44) connected to the clock generator (50) and to the input terminal (38), for providing a third signal (48) representing a supplemental switch-off time (t_{off_add}) in a second power range in which the power to be transmitted by the energy converter (10) is less than in the first power range, the clock generator (50) being designed to adjust the power to be transmitted by the energy converter (10) in the second power range by means of a combination of the second and the third signal (46, 48),
**characterized in that**
in the case of a change from the first power range into the second power range, the energy converter is configured to change the third signal by a predetermined value in order to achieve a greater supplemental switch-off time (t_{off_add}) and, at the same time, to change the second signal by a predetermined value in order to increase the switch-on time (tₒₙ) , the transmitted power remaining the same in the case of a change from the first power range into the second power range, and the third signal (48) being constant in sections over a power range.

2. Energy converter (10) according to Claim 1,
**characterized in that**
the change from the first power range into the second power range takes place at a minimum switch-on time (t_{on_min}).

3. Energy converter (10) according to Claim 1 or 2,
**characterized in that**
there are further power ranges, and the change to the next power range respectively takes place upon reaching the minimum switch-on time (t_{on_min}).

4. Energy converter (10) according to Claim 3,
**characterized in that**
the supplemental switch-off time (t_{off_add}) is always increased by the same value in the case of a change to the next power range.

5. Energy converter (10) according to Claim 3,
**characterized in that**
the switch-on time (tₒₙ) is always increased by a factor of the minimum switch-on time (t_{on_min}) in the case of a change to the next power range.

6. Energy converter (10) according to one of the preceding claims,
**characterized in that**
the clock generator (50) is designed to start, on reaching a predeterminable energy content of one of the at least two electrical energy storage devices (20, 26), a new clock cycle which begins with an additional switch-off phase of the electronic switching element (22) having a duration of the supplemental switch-off time (t_{off_add}), the additional switch-off phase being followed by a switch-on phase of the electronic switching element (22) with a duration of the switch-on time (tₒₙ).

7. Energy converter (10) according to one of the preceding claims,
**characterized in that**
the first timer (42) is designed to determine the switch-on time (tₒₙ) in the second power range, taking into consideration an electrical voltage (Uᵢₙ) present at the first terminal (12, 14) and/or an electrical voltage (Uₒᵤₜ) present at the second terminal (16, 18).

8. Energy converter (10) according to Claim 7, **characterized in that** the first timer (42) is designed to determine a voltage wave shape of the electrical voltage (Uᵢₙ) present at the first terminal (12, 14) and to determine the switch-on time (tₒₙ) in the second power range in dependence on the voltage wave shape determined.

9. Lighting device having an illuminant and an electrical terminal for connecting the lighting device to an electrical energy source, **characterized in that** the lighting device has a clocked electronic energy converter (10) according to one of the preceding claims.

10. Method for adjusting an electrical power to be transmitted by means of a clocked electronic energy converter (10) according to one of Claims 1 to 8, **characterized by** the following steps which are dependent on the power to be transmitted:
- in a first power range, determining a minimum switch-on time (t_{on_min}) and assigning a supplemental switch-off time (t_{off_add}) to the value 0,
- in order to reduce a transmitted power, reducing the switch-on time (tₒₙ) to the minimum switch-on time (t_{on_min}),
- when the minimum switch-on time (t_{on_min}) is reached by the switch-on time (tₒₙ), suddenly increasing the switch-on time (tₒₙ) and simultaneously increasing the supplemental switch-off time (t_{off_add}) by a predeterminable value (t_{off_step}),
- determining the supplemental switch-off time (t_{off_add}) as being constant over the power range until the minimum switch-on time (t_{on_min}) is next reached by the switch-on time (tₒₙ) .

11. Method according to Claim 10,
**characterized in that**
the switch-on time (tₒₙ) is always increased by a factor of the minimum switch-on time (t_{on_min}) in the case of a change to the next power range.

12. Method according to Claim 10 or 11,
**characterized in that**
the power to be transmitted remains constant in the case of a change to the next power range.

13. Method according to Claim 10, 11 or 12,
**characterized in that**
in a further power range, in which the power to be transmitted by the energy converter (10) is less than in the preceding lowest power range, the power to be transmitted by the energy converter (10) is adjusted by means of a constant switch-on time (tₒₙ) and by means of a supplemental switch-off time (t_{off_add}) increasing with decreasing power.

14. Method according to one of Claims 10 to 13,
**characterized in that**
the switch-on time (tₒₙ) in the second and the further power ranges is determined in dependence on a first signal (40) in such a manner that the power to be transmitted depends on the first signal (40) in the same manner as if the power to be transmitted were to be controlled analogously to the first power range, the first signal being set in dependence on a power to be transmitted by the energy converter (10).

15. Method according to one of Claims 10 to 14, **characterized in that** the switch-on time (tₒₙ) in the second and the further power ranges is determined, with consideration of a constant voltage amplitude and a constant curve shape for an electrical voltage (Uᵢₙ) of an energy source connected to the energy converter (10) and an electrical voltage (Uₒᵤₜ) provided by the energy converter (10), for a load connected to the energy converter (10) in such a manner that the switch-on time (tₒₙ) depends exclusively on the power to be transmitted.

16. Method according to one of Claims 10 to 15, **characterized in that** an alternating voltage is applied to the energy converter (10) at its input and it is controlled in such a manner that an input power factor is maximized.

17. Method according to Claim 16, **characterized in that** the switch-on time (tₒₙ) and/or the supplemental switch-off time (t_{off_add}) is/are specified as constant with a constant power to be transmitted by the energy converter (10) within a half or complete period of the alternating voltage present at the input end.

## Revendications

1. Convertisseur d'énergie électronique cadencé (10) avec
- un élément de commutation électronique (22),
- au moins deux accumulateurs d'énergie électrique (20, 26),
- une première borne (12, 14) pour le raccordement à une source d'énergie électrique,
- une deuxième borne (16, 18) pour le raccordement à un puits d'énergie électrique,
- un cadenceur (50) pour le contrôle de l'élément de commutation électronique (22) en mode commutation,
- une borne d'entrée (38) pour un premier signal (40) pour le réglage d'une puissance à transmettre du convertisseur d'énergie (10),
- un premier temporisateur (42) raccordé au cadenceur (50) et à la borne d'entrée (38), pour la mise à disposition d'un deuxième signal (46) représentant un temps de marche (tₒₙ), dans lequel le cadenceur (50) est conçu pour régler la puissance à transmettre du convertisseur d'énergie (10) dans une première plage de puissance au moyen du temps d'activation (tₒₙ) de l'élément de commutation électronique (22), ainsi que
- un deuxième temporisateur (44) raccordé au cadenceur (50) et à la borne d'entrée (38), pour la mise à disposition d'un troisième signal (48) représentant un temps d'arrêt complémentaire (t_{off_add}) dans une deuxième plage de puissance, dans lequel la puissance à transmettre du convertisseur d'énergie (10) est plus petite que dans la première plage de puissance, dans lequel le cadenceur (50) est conçu pour régler la puissance à transmettre du convertisseur d'énergie (10) dans la deuxième plage de puissance au moyen d'une combinaison des deuxième et troisième signaux (46, 48),
**caractérisé en ce que**
le convertisseur d'énergie est conçu pour modifier le troisième signal d'une valeur prédéterminée lors du passage de la première à la deuxième plage de puissance, afin d'obtenir un temps d'arrêt complémentaire (t_{off_add}) plus grand, et pour modifier simultanément le deuxième signal d'une valeur prédéterminée afin d'augmenter le temps de marche (tₒₙ), dans lequel la puissance à transmettre reste la même lors du passage de la première à la deuxième plage de puissance, et dans lequel le troisième signal (48) est constant à certains endroits sur une plage de puissance.

2. Convertisseur d'énergie (10) selon la revendication 1,
**caractérisé en ce que**
le passage de la première plage de puissance à la deuxième plage de puissance a lieu lors d'un temps de marche minimal (t_{on_min}).

3. Convertisseur d'énergie (10) selon la revendication 1 ou 2,
**caractérisé en ce que**
il existe d'autres plages de puissance et le passage à la plage de puissance suivante a lieu respectivement lorsque le temps de marche minimal (t_{on_min}) est atteint.

4. Convertisseur d'énergie (10) selon la revendication 3,
**caractérisé en ce que**
le temps d'arrêt complémentaire (t_{off_add}) est toujours augmenté de la même valeur lors du passage à la plage de puissance suivante.

5. Convertisseur d'énergie (10) selon la revendication 3,
**caractérisé en ce que**
le temps de marche (tₒₙ) est toujours augmenté d'un facteur du temps de marche minimal (t_{on_min}) lors du passage à la plage de puissance suivante.

6. Convertisseur d'énergie (10) selon l'une des revendications précédentes,
**caractérisé en ce que**
le cadenceur (50) est conçu pour démarrer, lorsqu'une teneur en énergie prédéterminée d'un des au moins deux accumulateurs d'énergie électrique (20, 26) est atteinte, un nouveau cycle de cadencement qui commence avec une phase d'arrêt supplémentaire de l'élément de commutation électronique (22), avec une durée du temps d'arrêt complémentaire (t_{off_add}), dans lequel, à la phase d'arrêt supplémentaire, succède une phase de marche de l'élément de commutation électronique (22) avec une durée du temps de marche (tₒₙ).

7. Convertisseur d'énergie (10) selon l'une des revendications précédentes,
**caractérisé en ce que**
le premier temporisateur (42) est conçu pour effectuer, dans la deuxième plage de puissance, la détermination du temps de marche (tₒₙ) en tenant compte d'une tension électrique (Uᵢₙ) appliquée à la première borne (12, 14) et/ou d'une tension électrique (Uₒᵤₜ) appliquée à la deuxième borne (16, 18).

8. Convertisseur d'énergie (10) selon la revendication 7,
**caractérisé en ce que** le premier temporisateur (42) est conçu pour déterminer une forme de tension de la tension électrique (Uᵢₙ) appliquée à la première borne (12, 14) et pour effectuer la détermination du temps de marche (tₒₙ) dans la deuxième plage de puissance en fonction de la forme de tension déterminée.

9. Dispositif d'éclairage avec un moyen d'éclairage et une borne électrique pour le raccordement du dispositif d'éclairage à une source d'énergie électrique, **caractérisé en ce que** le dispositif d'éclairage comprend un convertisseur d'énergie électronique cadencé (10) selon l'une des revendications précédentes.

10. Procédé de réglage d'une puissance électrique à transmettre au moyen d'un convertisseur d'énergie électronique cadencé (10) selon l'une des revendications 1 à 8, **caractérisé par** les étapes suivantes, qui dépendent de la puissance à transmettre :
- dans une première plage de puissance, spécification d'un temps de marche minimal (t_{on_min}) et attribution de la valeur 0 à un temps d'arrêt complémentaire (t_{off_add}),
- pour la réduction d'une puissance transmise, diminution du temps de marche (tₒₙ) jusqu'au temps de marche minimal (t_{on_min}),
- lorsque le temps de marche minimal (t_{on_min}) est atteint par le temps de marche (tₒₙ), augmentation brusque du temps de marche (tₒₙ) et augmentation simultanée du temps d'arrêt complémentaire (t_{off_add}) d'une valeur prédéterminée (t_{off_step}),
- spécification du temps d'arrêt complémentaire (t_{off_add}) comme étant constant sur la plage de puissance jusqu'à ce que le temps de marche minimale (t_{on_min}) soit à nouveau atteint par le temps de marche (tₒₙ).

11. Procédé selon la revendication 10,
**caractérisé en ce que**
le temps de marche (tₒₙ) est toujours augmenté d'un facteur du temps de marche minimal (t_{on_min}) lors du passage à la plage de puissance suivante.

12. Procédé selon la revendication 10 ou 11,
**caractérisé en ce que**
la puissance à transmettre reste constante lors du passage à la plage de puissance suivante.

13. Procédé selon la revendication 10, 11 ou 12,
**caractérisé en ce que**
dans une autre plage de puissance, dans laquelle la puissance à transmettre du convertisseur d'énergie (10) est plus petite que dans la plage de puissance la plus basse précédente, la puissance à transmettre du convertisseur d'énergie (10) est réglée au moyen d'un temps de marche (tₒₙ) constant et au moyen d'un temps d'arrêt complémentaire (t_{off_add}) qui augmente lorsque la puissance diminue.

14. Procédé selon l'une des revendications 10 à 13,
**caractérisé en ce que**
le temps de marche (tₒₙ) dans la deuxième et les autres plages de puissance est déterminé en fonction d'un premier signal (40) de façon à ce que la puissance à transmettre dépende du premier signal (40) de la même manière que si la puissance à transmettre était contrôlée de manière analogue à la première plage de puissance, dans lequel le premier signal est réglé en fonction d'une puissance à transmettre du convertisseur d'énergie (10).

15. Procédé selon l'une des revendications 10 à 14,
**caractérisé en ce que** le temps de marche (tₒₙ) dans la deuxième et les autres plages de puissance est déterminé en tenant compte d'une amplitude de tension constante et d'une forme de courbe constante pour une tension électrique (Uᵢₙ) d'une source d'énergie raccordée au convertisseur d'énergie (10) et d'une tension électrique (Uₒᵤₜ) mise à disposition par le convertisseur d'énergie (10) pour un consommateur raccordé au convertisseur d'énergie (10), de façon à ce que le temps de marche (tₒₙ) dépende exclusivement de la puissance à transmettre.

16. Procédé selon l'une des revendications 10 à 15, **caractérisé en ce que** le convertisseur d'énergie (10) est alimenté, côté entrée, avec une tension alternative, et contrôlé de façon à ce qu'un facteur de puissance côté entrée soit maximisé.

17. Procédé selon la revendication 16, **caractérisé en ce que** le temps de marche (tₒₙ) et/ou le temps d'arrêt complémentaire (t_{off_add}) est défini comme constant dans le cas d'une puissance constante à délivrer du convertisseur d'énergie (10) à l'intérieur d'une demi-période ou d'une période entière de la tension alternative appliquée côté entrée.
